# EUROPEAN PATENT APPLICATION

(11) **EP 4 813 540 A1**
(43) Date of publication of application: **30.09.2026**
(21) Application number: 24893961.3
(22) Date of filing: 30.10.2024
(51) Int. Cl.: B21D 22/20, B62D 25/08, B62D 25/20, C23C 28/00

(54) **BLANK, METHOD FOR MANUFACTURING STRUCTURAL MEMBER, AND STRUCTURAL MEMBER**

(30) Priority: 22.11.2023 JP 2023198685
(71) Applicant: Nippon Steel Corporation, Tokyo 100-8071 (JP)
(72) Inventor: KIMOTO, Naoki, Tokyo 100-8071 (JP); KUBO, Masahiro, Tokyo 100-8071 (JP); IGUCHI, Keinosuke, Tokyo 100-8071 (JP); YOSHIDA, Hiroshi, Tokyo 100-8071 (JP); IRIKAWA, Hideaki, Tokyo 100-8071 (JP); FUJITA, Soshi, Tokyo 100-8071 (JP); SUZUKI, Yuki, Tokyo 100-8071 (JP); SHIRAKAMI, Satoshi, Tokyo 100-8071 (JP)
(74) Representative: Zimmermann & Partner Patentanwälte mbB
(86) International application number: PCT/JP2024/038672
(87) International publication number: WO 2025/109969

(57) **Abstract**

A blank (30, 30A, 30B) includes a plurality of steel sheets. The plurality of steel sheets are disposed and joined to form two elongated parts (34L, 34R) and a coupling part (35). The plurality of steel sheets include a first steel sheet (31) and a second steel sheet (32). An end part of the second steel sheet (32) forms an overlap part (361) with an end part of the first steel sheet (31). The overlap part (361) has a largest sheet thickness (tₘₐₓ) in the blank (30, 30A, 30B). A surface (311, 321) of at least one of the first steel sheet (31) and the second steel sheet (32) that is located on an outer side of the overlap part (361) is subjected to a treatment for increasing the emissivity compared with at least one of other surfaces of the plurality of steel sheets.

## Description

### TECHNICAL FIELD

The present disclosure relates to a blank, a production method for a structural member, and the structural member.

### BACKGROUND ART

Structures such as a body of an automobile are formed of a plurality of structural members. Such a structural member is produced by press-forming a blank, for example. In order to ensure high strength and high dimensional accuracy, the structural member may be produced in a press forming method referred to as hot stamping. The hot stamping is a technique of heating a blank, which is a steel sheet, to a temperature in the austenite zone, press-forming the blank with press tooling, and quenching the blank by holding the blank in the press tooling for heat dissipation (rapid cooling).

Patent Literature 1 discloses a steel sheet (blank) for hot stamping. The steel sheet according to Patent Literature 1 has a surface-treated film having an emissivity of 60% or more at a temperature of 25°C and a wavelength of 8.0 µm on the whole of at least one surface thereof. According to Patent Literature 1, the surface of the steel sheet provided with the surface-treated film is increased in emissivity and has higher heat transfer effect through radiation. Therefore, when the steel sheet is heated for hot stamping, the steel sheet is quickly heated to a temperature equal to or higher than the A_{c3} point at which transformation of a metal structure into the austenite phase occurs. In Patent Literature 1, it is described that the heating time can be reduced in this way, and the productivity of the hot-stamped member can be improved.

Patent Literature 2 discloses a tailor welded blank for hot stamping. The tailor welded blank according to Patent Literature 2 includes a first steel sheet and a second steel sheet having a smaller area than the first steel sheet. The second steel sheet is overlaid on a surface of the first steel sheet and welded to the first steel sheet. Both the first steel sheet and the second steel sheet are aluminum-plated steel sheets, and the deposition amount of the plating layer on both surfaces is 20 g/m² or more and 120 g/m² or less. Provided that the average deposition amount of the aluminum-based plating layer on both surfaces of the first steel sheet is W1, the deposition amount of the aluminum-based plating layer on the surface of the second steel sheet that is not in contact with the first steel sheet is W2, the sheet thickness of the first steel sheet is t1, and the sheet thickness of the second steel sheet is t2, the tailor welded blank according to Patent Literature 2 satisfies relations that 30 ≤ (W1 - W2) ≤ 100 and (W1/W2)² × (t1/t2) ≥ 1.5. According to Patent Literature 2, by satisfying these relations, the alloying reaction of the plating layer that increases emissivity can quickly proceed to the surface in the overlap part between the first steel sheet and the second steel sheet in heating for hot stamping.

### CITATION LIST

### PATENT LITERATURE

Patent Literature 1: International Application Publication No. WO2022/215229
Patent Literature 2: Japanese Patent No. 6642777

### SUMMARY OF INVENTION

### TECHNICAL PROBLEM

In recent years, to simplify production processes for structures, integration of two or more members of a blank has been studied. That is, it is contemplated that a composite blank including a plurality of steel sheets (sub-blanks) is subjected to hot stamping so that structural members that would conventionally be separately shaped are shaped as a single member. In the composite blank, adjacent steel sheets are joined to each other by spot welding or the like in the state where end parts thereof are overlaid on one another, for example. When the composite blank includes such an overlap part, it is difficult to ensure a process window in production of the structural member. Specifically, for hot stamping, the blank is heated until the microstructure thereof is austenitized. However, the overlap part formed by partial overlapping of steel sheets has a larger sheet thickness than a non-overlap part, and therefore the temperature of the overlap part is slow to rise. For example, when the blank includes a plated steel sheet, while the overlap part having the largest sheet thickness in the blank is being heated in order to ensure the strength of the overlap part by hot stamping, in the steel sheet (non-overlap part) that is more quickly heated than the overlap part, alloying of the plating layer may excessively proceed, and the diffusion layer may become thick, and the corrosion resistance (rust resistance) of the plating layer may deteriorate or be lost. Thus, when the blank includes an overlap part, it is difficult to ensure a process window of the heating condition. Furthermore, the heating rate of the overlap part having the largest sheet thickness in the blank may be a bottleneck, and the productivity of the structural member may decrease.

An object of the present disclosure is to provide a blank for hot stamping that can produce a structural member that combines a strength of an overlap part having a largest sheet thickness and a rust resistance function.

### SOLUTION TO PROBLEM

A blank for hot stamping according to the present disclosure includes a plurality of steel sheets. The plurality of steel sheets are disposed and joined to form two elongated parts and a coupling part. The elongated parts are disposed side by side in a lateral direction in plan view of the blank. The coupling part couples the elongated parts to each other. The plurality of steel sheets includes a first steel sheet and a second steel sheet. The second steel sheet has an end part that is overlaid on and joined to an end part of the first steel sheet to form an overlap part with the end part of the first steel sheet. The overlap part has a largest sheet thickness in the blank. At least one of the plurality of steel sheets is a plated steel sheet having a base steel sheet and a plating layer provided on the base steel sheet. A surface of at least one of the first steel sheet and the second steel sheet that is located on an outer side of the overlap part is subjected to a treatment for increasing an emissivity compared with at least one of other surfaces of the plurality of steel sheets.

### ADVANTAGEOUS EFFECTS OF INVENTION

With a blank for hot stamping according to the present disclosure, a structural member that combines a strength of an overlap part having a largest sheet thickness and a rust resistance function can be produced.

### BRIEF DESCRIPTION OF THE DRAWINGS

[FIG. 1] FIG. 1 is an exploded perspective view of structural members according to a first embodiment.
[FIG. 2] FIG. 2 is a lateral cross-sectional view of a side frame included in each structural member shown in FIG. 1.
[FIG. 3A] FIG. 3A is a schematic diagram for illustrating a production method for the structural members according to the first embodiment, showing a blank corresponding to one of the structural members shown in FIG. 1.
[FIG. 3B] FIG. 3B is a schematic diagram for illustrating the production method for the structural members according to the first embodiment, showing a cross section of the blank shown in FIG. 3A.
[FIG. 3C] FIG. 3C is a schematic diagram for illustrating the production method for the structural members according to the first embodiment, showing another cross section of the blank shown in FIG. 3A.
[FIG. 3D] FIG. 3D is a schematic diagram for illustrating the production method for the structural members according to the first embodiment, showing a blank corresponding to the other of the structural members shown in FIG. 1.
[FIG. 3E] FIG. 3E is a schematic diagram for illustrating the production method for the structural member according to the first embodiment.
[FIG. 3F] FIG. 3F is a schematic diagram for illustrating the production method for the structural member according to the first embodiment.
[FIG. 3G] FIG. 3G is a schematic diagram for illustrating the production method for the structural member according to the first embodiment.
[FIG. 4] FIG. 4 is a cross-sectional view of the structural member produced in the production method according to the first embodiment.
[FIG. 5A] FIG. 5A is a cross-sectional view of the blank according to the second embodiment.
[FIG. 5B] FIG. 5B is another cross-sectional view of the blank according to the second embodiment.
[FIG. 6A] FIG. 6A is a cross-sectional view of a structural member according to the second embodiment.
[FIG. 6B] FIG. 6B is another cross-sectional view of the structural member according to the second embodiment.
[FIG. 7] FIG. 7 is a cross-sectional view of a blank according to a modification of the second embodiment.
[FIG. 8] FIG. 8 is an exploded perspective view of structural members according to a third embodiment.
[FIG. 9] FIG. 9 is a plan view of a blank according to the third embodiment.
[FIG. 10] FIG. 10 is a plan view of another blank according to the third embodiment.
[FIG. 11] FIG. 11 is a plan view of a blank according to a modification of the first embodiment.
[FIG. 12] FIG. 12 is a plan view of a blank according to another modification of the first embodiment.
[FIG. 13] FIG. 13 is a plan view of a blank according to another modification of the first embodiment.
[FIG. 14] FIG. 14 is a plan view of a blank according to a modification of the third embodiment.
[FIG. 15] FIG. 15 is a plan view of a blank according to another modification of the third embodiment.
[FIG. 16] FIG. 16 is a plan view of a blank according to another modification of the third embodiment.
[FIG. 17] FIG. 17 is a plan view of a blank according to another modification of the third embodiment.
[FIG. 18] FIG. 18 is a plan view of a blank according to another modification of the third embodiment.
[FIG. 19] FIG. 19 is a plan view of a blank according to another modification of the third embodiment.
[FIG. 20] FIG. 20 is a plan view of a blank according to another modification of the third embodiment.
[FIG. 21] FIG. 21 is a plan view of a blank according to another modification of the third embodiment.
[FIG. 22] FIG. 22 is a plan view of a blank according to another modification of the third embodiment.
[FIG. 23] FIG. 23 is a plan view of a blank according to another modification of the third embodiment.
[FIG. 24] FIG. 24 is a plan view of a blank according to another modification of the third embodiment.
[FIG. 25] FIG. 25 is a lateral cross-sectional view of a side frame included in a structural member according to a modification of each embodiment.
[FIG. 26A] FIG. 26A is a diagram showing a division pattern of a structural member in a first example.
[FIG. 26B] FIG. 26B is a diagram showing another division pattern of the structural member in the example.

### DESCRIPTION OF EMBODIMENTS

A blank for hot stamping according to an embodiment includes a plurality of steel sheets. The plurality of steel sheets are disposed and joined to form two elongated parts and a coupling part. The elongated parts are disposed side by side in a lateral direction in plan view of the blank. The coupling part couples the elongated parts to each other. The plurality of steel sheets includes a first steel sheet and a second steel sheet. The second steel sheet has an end part that is overlaid on and joined to an end part of the first steel sheet to form an overlap part with the end part of the first steel sheet. The overlap part has a largest sheet thickness in the blank. At least one of the plurality of steel sheets is a plated steel sheet having a base steel sheet and a plating layer provided on the base steel sheet. A surface of at least one of the first steel sheet and the second steel sheet that is located on an outer side of the overlap part is subjected to a treatment for increasing an emissivity compared with at least one of other surfaces of the plurality of steel sheets (a first configuration).

With the blank according to the first configuration, the end part of the first steel sheet and the end part of the second steel sheet form the overlap part having the largest sheet thickness in the blank. The surface of at least one of the first steel sheet and the second steel sheet that is located on the outer side of the overlap part is subjected to a treatment for increasing the emissivity compared with at least one of other surfaces of the plurality of steel sheets included in the blank. In this way, when the blank is heated for hot stamping, the heating rate of the overlap part can be increased, so that the heating time of the overlap part can be reduced. Therefore, the heating of the blank required for hot stamping can be completed before alloying of the plating layer in the plated steel sheet included in the blank excessively proceeds and the diffusion layer becomes thick. As a result, in the structural member shaped from the blank, the strength of the overlap part can be ensured by hot stamping, and the corrosion resistance (rust resistance) can be ensured. Note that "subjected to a treatment for increasing the emissivity" means not only a case where the emissivity of the surface of at least one of the first steel sheet and the second steel sheet located on the outer side of the overlap part is already higher than the emissivity of the other surfaces before the blank is heated but also a case where the emissivity of the surface of at least one of the first steel sheet and the second steel sheet located on the outer side of the overlap part is increased to be higher than the emissivity of the other surfaces during heating of the blank.

As described above, with the blank according to the first configuration, a structural member that combines the strength of the overlap part having the largest sheet thickness and the rust resistance function of the part of the plated steel sheet can be produced. That is, with the blank, the heating rate of the overlap part having the largest sheet thickness can be increased, and as a result, a process window of the heating condition in the production of the structural member is more likely to be ensured. Furthermore, by increasing the heating rate of the overlap part, the heating time of the blank for hot stamping can be reduced, so that the productivity of the structural member can be improved. Furthermore, since the heating time of the blank is reduced, the energy consumption in the production of the structural member can be reduced, and the emissions of the greenhouse effect gas during heating of the blank for hot stamping can be reduced.

In the blank according to the first configuration, of the plurality of steel sheets, a steel sheet that forms a part having a smallest sheet thickness in the blank may be the plated steel sheet (a second configuration).

When the blank is heated for hot stamping, the steel sheet having the smallest sheet thickness is relatively quickly heated. Therefore, when the steel sheet having the smallest sheet thickness in the blank is the plated steel sheet, while the overlap part having the largest sheet thickness is being heated in order to ensure the strength of the overlap part by hot stamping, in the plated steel sheet having the smallest sheet thickness that is more quickly heated than the overlap part, alloying of the plating layer more quickly proceeds, and the corrosion resistance of the plating layer may deteriorate or be lost. However, with the blank according to the embodiment, the surface of at least one of the first steel sheet and the second steel sheet that is located on the outer side of the overlap part is subjected to a treatment for increasing the emissivity. Therefore, the heating rate of the overlap part can be increased, and the heating time of the overlap part can be reduced, so that the heating of the blank required for hot stamping can be completed before alloying of the plating layer excessively proceeds in the steel sheet having the smallest sheet thickness that is more quickly heated than the overlap part. Therefore, even though the steel sheet having the smallest sheet thickness is the plated steel sheet in the second configuration, the corrosion resistance of the steel sheet can be ensured.

With the blank according to the first or second configuration, a surface of each of the first steel sheet and the second steel sheet that is located on the outer side of the overlap part may be subjected to the treatment for increasing the emissivity compared with at least one of other surfaces of the plurality of steel sheets (a third configuration).

With the blank according to the third configuration, the surface of each of the first steel sheet and the second steel sheet that is located on the outer side of the overlap part is subjected to a treatment for increasing the emissivity. That is, the emissivity of the surfaces on both outer sides of the overlap part is higher than the emissivity of the other surfaces before heating of the blank or during heating of the blank. In this case, the heating rate of the overlap part can be further increased in heating of the blank, and the heating time of the overlap part can be further reduced. Therefore, the process window of the heating condition in production of the structural member is more likely to be ensured.

In the blank according to any of the first to third configurations, each of the plurality of steel sheets may be the plated steel sheet (a fourth configuration).

In the fourth configuration, each steel sheet included in the blank is a plated steel sheet. In this case, when shaping the blank into a structural member by hot stamping, generation of oxide scales can be reduced. Therefore, after the hot stamping, the structural member does not need to be subjected to any treatment for removing oxide scales, such as shot blasting. Therefore, the productivity of the structural member can be improved. In addition, since each steel sheet is a plated steel sheet, the corrosion resistance of the structural member is more likely to be ensured.

In the blank according to the fourth configuration, the plating layer of each steel sheet is an aluminum-based plating layer (a fifth configuration).

When each steel sheet is a plated steel sheet having an aluminum-based plating layer as in the fifth configuration, when the blank is heated for hot stamping, a difference in heating rate is particularly likely to occur between the overlap part having the largest sheet thickness and non-overlap part. The aluminum-based plating layer is close to white in color and therefore tends to reflect thermal energy, which inhibits heating of the overlap part. However, even when each steel sheet is a plated steel sheet having an aluminum-based plating layer, if at least one of the surfaces on both outer sides of the overlap part is subjected to the treatment for increasing the emissivity, the heating of the overlap part can be promoted when heating the blank for hot stamping, and the heating time of the overlap part can be reduced. Therefore, the corrosion resistance of the part of the plated steel sheet can be ensured, and the productivity of the structural member produced from the blank can be improved.

In the blank according to any one of the third to fifth configurations, on the surface of each of the first steel sheet and the second steel sheet that is located on the outer side of the overlap part, a film may be formed as the treatment for increasing the emissivity. The film may have an emissivity of 60% or more at a temperature of 25°C and a wavelength of 8.0 µm (a sixth configuration).

In the blank according to any one of the third to fifth configurations, on the surface of each of the first steel sheet and the second steel sheet that is located on the outer side of the overlap part, a film may be formed as the treatment for increasing the emissivity. The film can contain carbon black, one or more oxides selected from among the group consisting of Zr oxide, Zn oxide and Ti oxide, and 0 to 0.30 g/m² of silica. In this case, provided that a content of the carbon black in the film is X_{CB} (g/m²), and a content of the oxide is X_{Oxide} (g/m²), X_{CB} and X_{Oxide} may satisfy Formula (1) (see Patent Literature 1) (a seventh configuration). $118.9 \leq 24280 \left\{6700/\left(100+76\times {X}_{CB}\right)+18000/\left(130+65\times {X}_{Oxide}\right)\right\} \leq 332.0$

In the blank according to any one of the third to seventh configurations, the plurality of steel sheets may include two or more steel sheets having different sheet thicknesses. In this case, provided that a sheet thickness of the overlap part is tₘₐₓ, and a sheet thickness of a steel sheet that forms a part having a smallest sheet thickness in the blank is tₘᵢₙ, a relation that tₘₐₓ/tₘᵢₙ ≤ 3.2 may hold (an eighth configuration).

When the blank includes two or more steel sheets having different sheet thicknesses, the difference in sheet thickness between the overlap part and the steel sheet that forms the part having the smallest sheet thickness in the blank is larger than when all the steel sheets included in the blank have the same sheet thickness. When the difference in sheet thickness is excessively large, when producing the structural member from the blank by hot stamping, heating of the overlap part is delayed compared with the steel sheet that forms the part having the smallest sheet thickness in the blank. Therefore, when the thinnest steel sheet is the plated steel sheet, for example, alloying of the plating layer of the thinnest steel sheet may excessively proceed, and it is likely to be difficult to ensure the process window of the heating condition. However, according to the eighth configuration, the ratio of the sheet thickness tₘₐₓ of the overlap part to the smallest sheet thickness tₘᵢₙ: tₘₐₓ/tₘᵢₙ is set to be 3.2 or less. In this way, even if the blank includes two or more steel sheets having different sheet thicknesses, heating of the overlap part, which is the thickest part, is likely to be ended before alloying of the plating layer excessively proceeds, and the process window of the heating condition is more likely to be ensured.

In the blank according to the first configuration, the plurality of steel sheets may further include a third steel sheet. Each of at least one of the first steel sheet and the second steel sheet and the third steel sheet may be the plated steel sheet having an aluminum-based plating layer as the plating layer on both surfaces of the base steel sheet. In this case, as the treatment for increasing the emissivity of the surface that is located on the outer side of the overlap part compared with an emissivity of a surface of the third steel sheet, a deposition amount (g/m²) of the aluminum-based plating layer on both surfaces of the base steel sheet of the at least one of the first steel sheet and the second steel sheet may be 60 or less and be less than a deposition amount (g/m²) of the aluminum-based plating layer on both surfaces of the base steel sheet of the third steel sheet (a ninth configuration).

The blank according to the ninth configuration includes the third steel sheet in addition to the first steel sheet and the second steel sheet. At least one of the first steel sheet and the second steel sheet, and the third steel sheet are aluminum-plated steel sheets. The deposition amount of the aluminum-based plating layer of the at least one of the first steel sheet and the second steel sheet is less than the deposition amount of the aluminum-based plating layer of the third steel sheet, and 60 g/m² or less. Since the first steel sheet and/or the second steel sheet are steel sheets with a relatively thin plating in this way, when the blank is heated for hot stamping, alloying of the aluminum-based plating layer of the first steel sheet and/or the second steel sheet with iron quickly proceeds, and both surfaces of the first steel sheet and/or the second steel sheet quickly change color from silver white to black or similar color. Therefore, during heating of the blank, the emissivity of the overlap part formed by the first steel sheet and the second steel sheet becomes higher than the emissivity of the third steel sheet. As a result, the overlap part can be relatively quickly heated to a temperature in the austenite zone, so that the heating time of the overlap part can be reduced. Therefore, the heating of the blank required for hot stamping can be completed before alloying of the aluminum-based plating layer of each steel sheet excessively proceeds and the diffusion layer becomes thick. As a result, the strength of the overlap part can be ensured by hot stamping, and the corrosion resistance (rust resistance) of each steel sheet can be ensured.

With the blank according to the ninth configuration, compared with at least one of the first steel sheet and the second steel sheet forming the overlap part, the third steel sheet has a larger deposition amount of the aluminum-based plating layer. That is, the third steel sheet has a higher rust resistance performance than the first steel sheet and/or the second steel sheet. Therefore, in the structural member shaped from the blank, the rust resistance performance can be partially increased. For example, the rust resistance performance required for the whole of the structural member can be ensured by arranging the third steel sheet at a part of the structural member that requires a higher rust resistance performance.

In the blank according to the ninth configuration, the plurality of steel sheets may include two or more steel sheets having different sheet thicknesses. In this case, provided that a sheet thickness of the overlap part is tₘₐₓ, and a sheet thickness of a steel sheet having a smallest sheet thickness among the plurality of steel sheets is tₘᵢₙ, a relation that tₘₐₓ/tₘᵢₙ ≤ 3.0 may hold (a tenth configuration).

When the blank includes two or more steel sheets having different sheet thicknesses, the difference in sheet thickness between the overlap part and the non-overlap part is larger than when all the steel sheets included in the blank have the same sheet thickness. That is, the difference in sheet thickness between the overlap part having the largest sheet thickness in the blank and the steel sheet having the smallest sheet thickness is larger. When the difference in sheet thickness is excessively large, when producing the structural member from the blank by hot stamping, heating of the overlap part is delayed compared with the steel sheet having the smallest sheet thickness. Therefore, when the thinnest steel sheet is a plated steel sheet, alloying of the plating layer may excessively proceed in the thinnest steel sheet, and it is likely to be difficult to ensure the process window of the heating condition. Therefore, in the tenth configuration, when the first steel sheet and/or the second steel sheet forming the overlap part are steel sheets with a relatively thin plating, the ratio of the sheet thickness tₘₐₓ of the overlap part to the smallest sheet thickness tₘᵢₙ: tₘₐₓ/tₘᵢₙ is set to be 3.0 or less. In this way, the heating of the overlap part having the largest thickness is more likely to be completed before alloying of the plating layer in each plated steel sheet excessively proceeds, and the process window of the heating condition is more likely to be ensured.

In the blank according to the ninth configuration, the plurality of steel sheets can include two or more steel sheets having different sheet thicknesses. In this case, provided that a sheet thickness of the overlap part is tₘₐₓ, and a sheet thickness of a steel sheet having a smallest sheet thickness among the plurality of steel sheets is tₘᵢₙ, a relation that tₘₐₓ/tₘᵢₙ ≤ 4.0 may hold. Furthermore, a surface of at least one of the first steel sheet and the second steel sheet that is located on the outer side of the overlap part may be coated with a film that is black in color (an eleventh configuration).

According to the eleventh configuration, the first steel sheet and/or the second steel sheet forming the overlap part are steel sheets with a relatively thin plating, and in at least one of the first steel sheet and the second steel sheet, the surface located on the outer side of the overlap part is provided with the film that is substantially black in color. In this way, the emissivity of the overlap part can be increased in advance, and the overlap part can be more quickly heated when heating the blank for hot stamping. Therefore, even when there is a larger difference in sheet thickness between the overlap part having the largest sheet thickness in the blank and the steel sheet having the smallest sheet thickness, the process window of the heating condition is more likely to be ensured. For example, even if the ratio of the sheet thickness tₘₐₓ of the overlap part to the smallest sheet thickness tₘᵢₙ: tₘₐₓ/tₘᵢₙ is increased to 4.0, the process window is likely to be ensured.

A production method for a structural member according to an embodiment includes a step of preparing the blank according to any one of the first to eleventh configurations, a step of heating the plurality of steel sheets included in the blank to an austenite transformation completion temperature or higher, and a step of shaping and quenching the heated blank with press tooling (a twelfth configuration).

A structural member for a vehicle body according to an embodiment can include a pair of side frames and a cross member. The cross member couples the side frames to each other. The side frames and the cross member are formed by a plurality of steel sheets joined to each other. The plurality of steel sheets include a first steel sheet and a second steel sheet. The second steel sheet has an end part that is overlaid on and joined to an end part of the first steel sheet to form an overlap part with the end part of the first steel sheet. A film is provided on a surface of each of the first steel sheet and the second steel sheet that is located on an outer side of the overlap part. The film contains 0.001 g/m² or more of one or more oxides selected from among the group consisting of Zr oxide, Zn oxide and Ti oxide (a thirteenth configuration).

A structural member for a vehicle body according to another embodiment can include a pair of side frames and a cross member. The cross member couples the side frames to each other. The side frames and the cross member are formed by a plurality of steel sheets joined to each other. The plurality of steel sheets include a first steel sheet and a second steel sheet. The second steel sheet has an end part that is overlaid on and joined to an end part of the first steel sheet to form an overlap part with the end part of the first steel sheet. A film is provided on a surface of each of the first steel sheet and the second steel sheet that is located on an outer side of the overlap part. The film contains 0.500 g/m² or less of carbon black (a fourteenth configuration).

A structural member for a vehicle body according to another embodiment can include a pair of side frames and a cross member. The cross member couples the side frames to each other. The side frames and the cross member are formed by a plurality of steel sheets joined to each other. The plurality of steel sheets include a first steel sheet, a second steel sheet and a third steel sheet. The second steel sheet has an end part that is overlaid on and joined to an end part of the first steel sheet to form an overlap part with the end part of the first steel sheet. Each of at least one of the first steel sheet and the second steel sheet and the third steel sheet is a plated steel sheet having an aluminum-based plating layer on both surfaces of a base steel sheet. A thickness of the aluminum-based plating layer of the at least one of the first steel sheet and the second steel sheet is less than a thickness of the aluminum-based plating layer of the third steel sheet (a fifteenth configuration).

In the structural member according to the fifteenth configuration, provided that, in the overlap part, a largest value and a smallest value of Vickers hardness of a steel sheet among the first steel sheet and the second steel sheet that is located on a front surface-side of the structural member are HVₘₐₓ and HVₘᵢₙ, respectively, HVₘₐₓ - HVₘᵢₙ may be 30% or less of HVₘₐₓ (a sixteenth configuration).

In the following, embodiments of the present disclosure will be described with reference to the drawings. In the drawings, the same or corresponding components are denoted by the same reference numerals, and redundant descriptions will be omitted.

### <First Embodiment>

### [Structural Member]

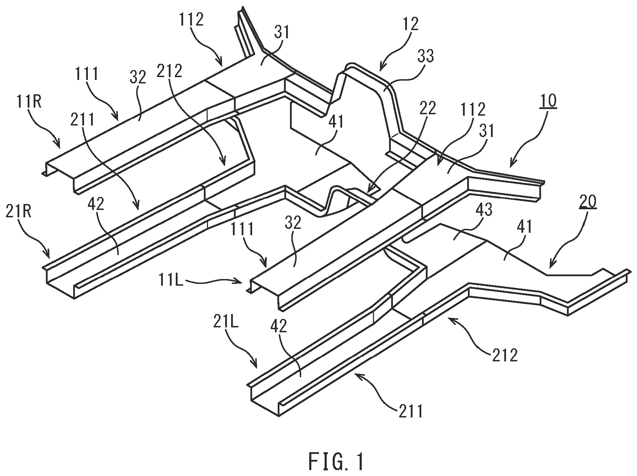

FIG. 1 is an exploded perspective view of structural members 10 and 20 according to a first embodiment. The structural members 10 and 20 are used in a vehicle body, such as an automobile. In the example shown in FIG. 1, the structural members 10 and 20 form a lower front module of a vehicle body.

The structural member 10 is an upper-side module. That is, the structural member 10 is disposed above the structural member 20 in a state where the structural member 10 is assembled in the vehicle body. The structural member 10 includes a pair of side frames 11L and 11R and at least one cross member 12. The side frames 11L and 11R and the cross member 12 each have an elongated shape.

The side frames 11L and 11R are disposed side by side in a left-and-right direction of the vehicle body in the state where the structural member 10 is assembled in the vehicle body. The side frames 11L and 11R each extend in a front-and-rear direction of the vehicle body. Each of the side frames 11L and 11R includes a front part 111 and a rear part 112. The rear part 112 is disposed to the rear of the front part 111 in the state where the structural member 10 is assembled in the vehicle body.

The cross member 12 extends in the left-and-right direction of the vehicle body in the state where the structural member 10 is assembled in the vehicle body. The cross member 12 extends from the side frame 11L to the side frame 11R. The cross member 12 couples the side frames 11L and 11R to each other. In the example shown in FIG. 1, the cross member 12 couples the side frames 11L and 11R to each other at one ends of the side frames 11L and 11R in a longitudinal direction thereof. The cross member 12 is disposed in a rear end part of the structural member 10, for example, in the state where the structural member 10 is assembled in the vehicle body. However, the cross member 12 may couple the side frames 11L and 11R to each other at middle parts thereof.

The structural member 20 is a lower-side module. That is, the structural member 20 is disposed below the structural member 10 in a state where the structural member 20 is assembled in the vehicle body. The structural member 20 includes a pair of side frames 21L and 21R and at least one cross member 22. The side frames 21L and 21R and the cross member 22 each have an elongated shape.

The side frames 21L and 21R are disposed side by side in the left-and-right direction of the vehicle body in the state where the structural member 20 is assembled in the vehicle body. The side frames 21L and 21R each extend in the front-and-rear direction of the vehicle body. Each of the side frames 21L and 21R includes a front part 211 and a rear part 212. The rear part 212 is disposed to the rear of the front part 211 in the state where the structural member 10 is assembled in the vehicle body.

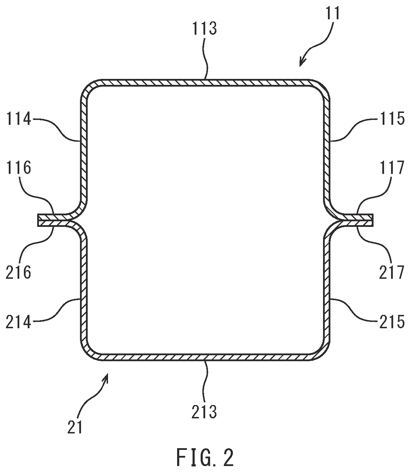

The lower-side side frames 21L and 21R are joined to the upper-side side frames 11L and 11R, respectively. The side frames 11L and 21L form a closed cross section, and the side frames 11R and 21R form a closed cross section. FIG. 2 shows a closed cross section formed by the side frame 21L or 21R and the side frame 11L or 11R. In the following, the side frames 11L and 11R will be collectively referred to as a side frame 11 when the side frames 11L and 11R do not need to be distinguished from each other. Similarly, the side frames 21L and 21R will be collectively referred to as a side frame 21 when the side frames 21L and 21R need not be distinguished from each other.

FIG. 2 is a cross-sectional view (lateral cross-sectional view) of the side frames 11 and 21 taken along a plane perpendicular to the longitudinal direction. In the example in FIG. 2, the side frames 11 and 21 each have a substantially hat-shaped cross section.

Referring to FIG. 2, the side frame 11 includes a top plate 113, vertical walls 114 and 115, and flanges 116 and 117. In the lateral cross-sectional view of the side frame 11, the vertical walls 114 and 115 are connected at one ends thereof via the top plate 113. In the lateral cross-sectional view of the side frame 11, the vertical walls 114 and 115 are connected to the flanges 116 and 117, respectively, at the other ends thereof. The flanges 116 and 117 project outward from the vertical walls 114 and 115, respectively.

The side frame 21 includes a top plate 213, vertical walls 214 and 215, and flanges 216 and 217. In the lateral cross-sectional view of the side frame 21, the vertical walls 214 and 215 are connected at one ends thereof via the top plate 213. In the lateral cross-sectional view of the side frame 21, the vertical walls 214 and 215 are connected to the flanges 216 and 217, respectively, at the other ends thereof. The flanges 216 and 217 project outward from the vertical walls 214 and 215, respectively.

The top plate 213 of the lower-side side frame 21 is disposed to be opposed to the top plate 113 of the upper-side side frame 11. In the lateral cross-sectional view of the side frames 11 and 21, the vertical walls 214 and 215 of the side frame 21 extend from the top plate 213 toward the side frame 11. The flanges 216 and 217 of the side frame 21 are joined to the flanges 116 and 117 of the side frame 11, respectively. The flanges 216 and 217 are joined to the flanges 116 and 117 by spot welding, for example. In the example in FIG. 2, the flanges 116 and 117 of the upper-side side frame 11 are directly joined to the flanges 216 and 217 of the lower-side side frame 21. However, another member, such as a floor panel, may be provided between the side frames 11 and 21.

Referring back to FIG. 1, the cross member 22 extends in the left-and-right direction of the vehicle body in the state where the structural member 20 is assembled in the vehicle body. The cross member 22 extends from the side frame 21L to the side frame 21R. The cross member 22 couples the side frames 21L and 21R to each other. In the example shown in FIG. 1, the cross member 22 couples the side frames 21L and 21R to each other at one ends of the side frames 21L and 21R in the longitudinal direction thereof. As with the upper-side cross member 12, the cross member 22 is disposed in the rear end part of the structural member 20, for example, in the state where the structural member 20 is assembled in the vehicle body. However, the cross member 22 may couple the side frames 21L and 21R to each other at middle parts thereof. The cross member 22 may be joined to the upper-side cross member 12 by spot welding, for example.

The structural members 10 and 20 are hot-stamped members. That is, the structural member 10 is formed by hot-stamping (hot-pressing) a blank formed by a plurality of steel sheets (sub-blanks). Similarly, the structural member 20 is formed by hot-stamping a blank formed by a plurality of steel sheets.

In the upper-side structural member 10, for example, the side frames 11L and 11R may be each formed by a plurality of steel sheets 31 and 32. In each of the side frames 11L and 11R, for example, the rear part 112 may be formed by the steel sheet 31, and the front part 111 may be formed by the steel sheet 32. The steel sheet 31 forming the rear part 112 may be greater than the steel sheet 32 forming the front part 111 in at least one of sheet thickness and tensile strength. The cross member 12 may be mainly formed by a steel sheet 33 that is different from the steel sheets 31 and 32 forming the side frames 11L and 11R. Of the steel sheets 31, 32 and 33, adjacent steel sheets are joined to each other by welding.

Similarly, in the lower-side structural member 20, for example, the side frames 21L and 21R may be each formed by a plurality of steel sheets 41 and 42. In each of the side frames 21L and 21R, for example, the rear part 212 may be formed by the steel sheet 41, and the front part 211 may be formed by the steel sheet 42. The steel sheet 41 forming the rear part 212 may be greater than the steel sheet 42 forming the front part 211 in at least one of sheet thickness and tensile strength. The cross member 22 may be mainly formed by a steel sheet 43 that is different from the steel sheets 41 and 42 forming the side frames 21L and 21R. Of the steel sheets 41, 42 and 43, adjacent steel sheets are joined to each other by welding.

### [Production Methods for Structural Members]

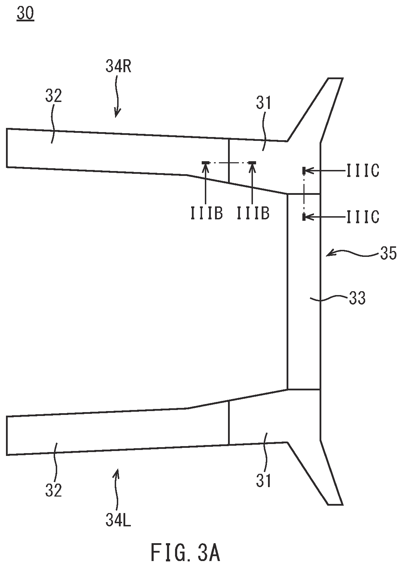

In the following, production methods for the structural members 10 and 20 according to this embodiment will be described with reference to FIGS. 3A to 3G. The production method for the structural member 10 includes a step of preparing a blank 30, a step of heating the blank 30 and a step of shaping the heated blank 30 into the structural member 10. Similarly, the production method for the structural member 20 includes a step of preparing a blank 40, a step of heating the blank 40 and a step of shaping the heated blank 40 into the structural member 20.

### (Preparation Step)

As shown in FIG. 3A, in production of the upper-side structural member 10 (FIG. 1), the blank 30 is prepared in the preparation step. The blank 30 has the shape of the structural member 10 developed. The blank 30 includes a plurality of steel sheets (sub-blanks) 31, 32 and 33. The steel sheets 31, 32 and 33 are disposed and joined to form two elongated parts 34L and 34R and at least one coupling part 35.

The elongated parts 34L and 34R are disposed side by side in a lateral direction in plan view of the blank 30. The elongated part 34L is a part of the blank 30 corresponding to the side frame 11L (FIG. 1). The elongated part 34R is a part of the blank 30 corresponding to the side frame 11R (FIG. 1). In the example in FIG. 3A, the elongated parts 34L and 34R are each formed by the steel sheets 31 and 32.

The coupling part 35 couples the elongated parts 34L and 34R to each other. The coupling part 35 is a part of the blank 30 corresponding to the cross member 12 (FIG. 1). In the example in FIG. 3A, the coupling part 35 includes the steel sheet 33. The coupling part 35 may further include a part of the steel sheets 31.

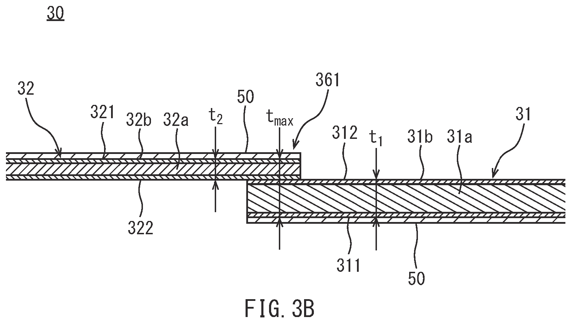

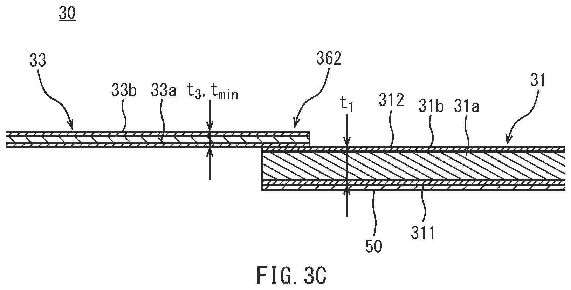

FIGS. 3B and 3C are cross-sectional views of the blank 30, showing junctures between the steel sheets 31, 32 and 33. FIGS. 3B and 3C are cross-sectional views taken along the lines IIIB-IIIB and IIIC-IIIC in FIG. 3A, respectively. Referring to FIGS. 3B and 3C, in the example of this embodiment, the steel sheet 31 is lap-joined to the steel sheet 32. The steel sheet 31 is also lap-joined to the steel sheet 33. That is, an end part of the steel sheet 31 is overlaid on and joined to an end part of the steel sheet 32 to form an overlap part 361 with the end part of the steel sheet 32. Similarly, another end part of the steel sheet 31 is overlaid on and joined to an end part of the steel sheet 33 to form an overlap part 362 with the end part of the steel sheet 33. The steel sheets 31, 32 and 33 are joined by spot welding or laser welding, for example.

With reference to FIGS. 3B and 3C, the steel sheet 31 has a sheet thickness t₁. The steel sheet 32 has a sheet thickness t₂. The steel sheet 33 has a sheet thickness t₃. In the example of this embodiment, the sheet thickness t₁ of the steel sheet 31 is larger than the sheet thickness t₂ of the steel sheet 32 and the sheet thickness t₃ of the steel sheet 33. The overlap part 361 between the steel sheets 31 and 32 has the largest sheet thickness tₘₐₓ in the blank 30. The sheet thickness tₘₐₓ of the overlap part 361 is larger than the sheet thickness of the overlap part 362 between the steel sheets 31 and 33.

In the example of this embodiment, among the plurality of steel sheets 31, 32 and 33 included in the blank 30, the sheet thickness t₃ of the steel sheet 33 is the smallest. Therefore, the steel sheet 33 forms a part having the smallest sheet thickness tₘᵢₙ in the blank 30. That is, the part of the steel sheet 33 that is not overlaid on the other steel sheet 31 is the part of the blank 30 that has the smallest sheet thickness tₘᵢₙ, and the sheet thickness tₘᵢₙ is the sheet thickness t₃ of the steel sheet 33.

When the plurality of steel sheets 31, 32 and 33 have different sheet thicknesses t₁, t₂ and t₃ as in this embodiment, the ratio between the largest sheet thickness tₘₐₓ and the smallest sheet thickness tₘᵢₙ in the blank 30: tₘₐₓ/tₘᵢₙ is more than 2.0. In this case, the largest sheet thickness tₘₐₓ and the smallest sheet thickness tₘᵢₙ satisfy a relation that tₘₐₓ/tₘᵢₙ < 4.0, for example. The largest sheet thickness tₘₐₓ and the smallest sheet thickness tₘᵢₙ preferably satisfy a relation that tₘₐₓ/tₘᵢₙ ≤ 3.2. The largest sheet thickness tₘₐₓ and the smallest sheet thickness tₘᵢₙ may satisfy a relation that tₘₐₓ/tₘᵢₙ ≥ 2.5. The largest sheet thickness tₘₐₓ is 4.6 mm or less, for example. The sheet thickness tₘₐₓ may be 1.6 mm or more.

The steel sheets 31 and 32 form the overlap part 361 having the largest sheet thickness tₘₐₓ in the blank 30. Surfaces 311 and 321 of the steel sheets 31 and 32 that are located on the outer sides of the overlap part 361 are subjected to a treatment for increasing the emissivity to be higher than the emissivity of at least one of the other surfaces of the steel sheets 31, 32 and 33 included in the blank 30. In this embodiment, the emissivity of the surface 311 of the steel sheet 31 and the surface 321 of the steel sheet 32 is higher than the emissivity of at least one of the other surfaces before the heating step. That is, the emissivity of the surface 311 of the steel sheet 31 and the surface 321 of the steel sheet 32 is higher than the emissivity of surfaces 312 and 322 of the steel sheets 31 and 32 that are located on the inner side of the overlap part 361 and/or the emissivity of one surface or both surfaces of the other steel sheet 33. The surfaces 311 and 321 of the steel sheets 31 and 32 that are located on the outer sides of the overlap part 361 are surfaces that form the front and back surfaces of the overlap part 361 having the largest sheet thickness tₘₐₓ.

In this embodiment, the emissivity of the surfaces 311 and 321 of the steel sheets 31 and 32 that are located on the outer sides of the overlap part 361 is higher than the emissivity of the surfaces 312 and 322 that are located on the inner side of the overlap part 361. Furthermore, the emissivity of the surfaces 311 and 321 of the steel sheets 31 and 32 that are located on the outer sides of the overlap part 361 is higher than the emissivity of both surfaces of the steel sheet 33 that forms the part having the smallest sheet thickness tₘᵢₙ. For example, the emissivity of the surfaces 311 and 321 of the steel sheets 31 and 32 at a temperature of 25°C and a wavelength of 8.0 µm is 60% or more. The emissivity of the surfaces 311 and 321 of the steel sheets 31 and 32 at a temperature of 25°C and a wavelength of 8.0 µm is more preferably 70% or more, and even more preferably 80% or more. Among the steel sheets 31, 32 and 33 included in the blank 30, the emissivity of at least one surface other than the surfaces 311 and 321 at a temperature of 25°C and a wavelength of 8.0 µm may be less than 60%. The difference in emissivity at a temperature of 25°C and a wavelength of 8.0 µm between the surfaces 311 and 321 on the outer sides of the overlap part 361 and at least one surface other than the surfaces 311 and 321 is preferably more than 5%, more preferably more than 10%, and even more preferably more than 20%. The emissivity can be measured according to JIS R 1801: 2002. In this case, a specimen taken from the steel sheet to be measured is set in a Fourier transform infrared spectrophotometer, and the radiation intensity is measured at a temperature of 25°C and a wavelength of 8.0 µm to calculate the emissivity. Alternatively, a radiation thermometer may be used, the measurement wavelength thereof may be set at 8.0 µm, the radiation intensity of an involved region may be measured at 25°C, and the emissivity may be calculated from the ratio of the radiation intensity to the radiation intensity of a blackbody.

In this embodiment, on the surfaces 311 and 321 of the steel sheets 31 and 32 that are located on the outer sides of the overlap part 361, a film 50 is formed as a treatment for increasing the emissivity. For example, the whole of the surface 311 of the steel sheet 31 that is located on the opposite side to the steel sheet 32 is coated with the film 50. For example, the whole of the surface 321 of the steel sheet 32 that is located on the opposite side to the steel sheet 31 is coated with the film 50. On the other hand, the surfaces 312 and 322 of the steel sheets 31 and 32 that are located on the inner side of the overlap part 361 are not provided with the film 50. The steel sheet 33 is also not provided with the film 50. Thus, in the blank 30, the emissivity of the surfaces on both outer sides of the overlap part 361 is higher than the emissivity of the other surfaces.

The film 50 is a film that is substantially black in color, for example. For example, when the lightness L* value of the surface of the film 50 (CIE 1976 lightness index L* defined in JIS Z8781-4: 2013) is 60 or less, the film 50 can be determined to be substantially black in color. The film 50 may be a surface-treated carbon-based film (a film containing carbon (C)). The emissivity of the film 50 at a temperature of 25°C and a wavelength of 8.0 µm is 60% or more, preferably 70% or more, and more preferably 80% or more. That is, the emissivity of the surfaces 311 and 321 of the steel sheets 31 and 32 provided with the film 50 at a temperature of 25°C and a wavelength of 8.0 µm is 60% or more, preferably 70% or more, and more preferably 80% or more. The film 50 may have an emissivity of 60% or more at a temperature of 700°C and a wavelength of 8.0 µm. As the film 50, a surface-treated film described in Patent Literature 1 may be used, for example. Specifically, the film 50 may contain carbon black and one or more oxides selected from among the group consisting of Zr oxide, Zn oxide and Ti oxide. The film 50 may or may not contain silica. In other words, the content of silica in the film 50 is 0 g/m² or more. The content of silica in the film 50 may be 0.30 g/m² or less. The content of silica is more preferably 0.10 g/m² or less, and more preferably 0.05 g/m² or less.

The carbon black and the oxide may be dispersed over the whole of a surface of the film 50 that is perpendicular to the sheet thickness direction of the steel sheet 31. Provided that the content of carbon black is X_{CB} (g/m²), and the content of the one or more oxides (metal oxides) selected from among the group consisting of Zr oxide, Zn oxide and Ti oxide is X_{Oxide} (g/m²), X_{CB} and X_{Oxide} preferably satisfy the following Formula (1). $118.9 \leq 24280 / \left\{6700/\left(100+76\times {X}_{CB}\right)+18000/\left(130+65\times {X}_{Oxide}\right)\right\} \leq 332.0$

In Formula (1), the value calculated by the middle term: 24280/{6700/(100 + 76 × X_{CB}) + 18000/(130 + 65 × X_{Oxide})} is preferably 119.0 or more, more preferably 170.0 or more, and even more preferably 220.0 or more. The value calculated by the middle term is preferably 330.0 or less, more preferably 310.0 or less, and even more preferably 300.0 or less.

The dispersion state of the carbon black and the metal oxide in the film 50 can be checked by surface analysis of the film 50 in terms of an element (such as C) deriving from carbon black or an element (such as Zr, Zn or Ti) deriving from the oxide with an electron probe micro analyzer (EPMA). The content X_{CB} of carbon black can be measured by cross-sectional analysis of the film 50 with a transmission electron microscope (TEM). Specifically, cross-sectional analysis of a region of the film 50 having a predetermined size (film thickness of the film 50 × 5 µm) is performed by TEM-EDS analysis, and the film thickness of the film 50 and the area fraction of particles having a carbon content of 70 mass% or more in the region are measured. Provided that the density of carbon black is ρ (ton/m³), the film thickness is d (µm) and the area fraction is a (%), the value of ρ × d × a is the content X_{CB} (g/m²) of carbon black. The content X_{Oxide} of the oxide can be determined by performing element analysis of the surface of the film 50 using an X-ray fluorescence spectrometer (ZSX Primus available from RIGAKU Holdings Corporation) and quantifying the metal Zr, Zn or Ti.

The content X_{CB} of carbon black in the film 50 is preferably 0.030 g/m² or more, and more preferably 0.100 g/m² or more. Although the content X_{CB} can be set in any range that satisfies Formula (1), the content X_{CB} is preferably 0.800 g/m² or less, and more preferably 0.600 g/m² or less.

The film 50 may contain 5.0 or more carbon black in vol%, and preferably contains 8.0 or more carbon black in vol%. Furthermore, the film 50 may contain 40.0 or less carbon black in vol%, and preferably contains 30.0 or less carbon black in vol%.

The content X_{Oxide} of the metal oxide in the film 50 is preferably 0.030 g/m² or more, and more preferably 0.060 g/m² or more. Although the content X_{Oxide} can be set in any range that satisfies Formula (1), the content X_{Oxide} is preferably 0.500 g/m² or less, and more preferably 0.300 g/m² or less.

The film 50 may contain 1.0 or more metal oxide in vol%. Furthermore, the film 50 may contain 30.0 or less metal oxide in vol%, and preferably contains 25.0 or less metal oxide in vol%.

The ratio between the content X_{CB} (g/m²) of carbon black and the content X_{Oxide} (g/m²) of metal oxide: X_{Oxide}/X_{CB} is preferably 0.20 or more and 200.00 or less. X_{Oxide}/X_{CB} is more preferably 0.40 or more and 10.00 or less, and more preferably 0.60 or more and 5.00 or less.

The film 50 may contain various kinds of binder components or addition agents, in addition to the carbon black and the metal oxides described above.

The binder component is preferably a water-dispersible or water-soluble resin. The content of the binder component is preferably 40 vol% or more of the overall volume of the film 50. As the binder component selected from among water-dispersible or water-soluble resins, various kinds of well-known resins that exhibit water dispersibility or water solubility can be used. Such resins that exhibit water dispersibility or water solubility include polyurethane resin, polyester resin, acrylic resin, epoxy resin, fluororesin, polyamide resin, polyolefin resin, and polymer compounds obtained by hydrolysis and condensation polymerization of silane coupling agents, for example. The binder component is more preferably one, two or more selected from among the group consisting of polyester resin, polyurethane resin, polyolefin resin, acrylic resin, epoxy resin, fluororesin and polyamide resin. When polyurethane resin is used as the binder component, the polyurethane resin is preferably polyether-based polyurethane resin.

The addition agent is a leveling agent, a water-soluble solvent, a metal stabilizer or an etching inhibitor, for example. The leveling agent is a nonionic or cationic surface-active agent, for example. The nonionic or cationic surface-active agent may be a polyethylene oxide or polypropylene oxide adduct, or an acetylene glycol compound, for example. The water-soluble solvent may be an alcohol such as ethanol, isopropyl alcohol, t-butyl alcohol or propylene glycol, a cellosolve such as ethylene glycol monobutyl ether or ethylene glycol monoethyl ether, an ester such as ethyl acetate or butyl acetate, or a ketone such as acetone, methyl ethyl ketone or methyl isobutyl ketone, for example. The metal stabilizer may be a chelate compound such as ethylenediaminetetraacetic acid (EDTA) or diethylenetriaminepentaacetic acid (DTPA), for example. The etching inhibitor may be an amine compound such as ethylenediamine, triethylenepentamine, guanidine or pyrimidine, for example.

The film 50 can be formed by applying an organic or inorganic processing liquid containing carbon black and a metal oxide to the whole of the surfaces 311 and 321 of the steel sheets 31 and 32 and then drying the volatile constituents in the processing liquid. The processing liquid can be applied to the surfaces 311 and 321 of the steel sheets 31 and 32 with a roll coater, a curtain coater or an ink jet, for example. In the case of the ink jet, the film thickness of the film 50 can be continuously varied. The film thickness of the film 50 is 0.5 µm or more and 5.0 µm or less, for example. The film thickness of the film 50 is preferably 1.0 µm or more and 3.0 µm or less. The film thickness of the film 50 is small enough to be negligible compared with the sheet thicknesses t₁ and t₂ of the steel sheets 31 and 32. Therefore, the measured sheet thickness of the steel sheets 31 and 32 including the film 50 can be treated as the sheet thicknesses t₁ and t₂ of the steel sheets 31 and 32, respectively.

At least one of the steel sheets 31, 32 and 33 included in the blank 30 is a plated steel sheet. For example, the steel sheet 33 having the smallest sheet thickness tₘᵢₙ may be a plated steel sheet. In this case, the steel sheet 33 includes a base steel sheet 33a and a plating layer 33b. The type of the base steel sheet 33a is not particularly limited. The plating layer 33b is provided on the base steel sheet 33a. The plating layer 33b covers the whole or substantially the whole of both surfaces of the base steel sheet 33a. The plating layer 33b is a metal plating layer. The plating layer 33b may be a molten aluminum plating or may be a molten zinc plating, a galvannealed plating or an electrogalvanized plating, for example. As the steel sheet 33, a well-known aluminum-plated steel sheet or zinc-plated steel sheet can be used, for example. The sheet thickness t₃ (tₘᵢₙ) of the steel sheet 33 is the total sheet thickness of the base steel sheet 33a and the plating layer 33b. The sheet thickness t₃ is an average sheet thickness of the steel sheet 33.

As with the steel sheet 33, the steel sheets 31 and 32 may be a well-known plated steel sheet. Specifically, the steel sheet 31 may include a base steel sheet 31a and a plating layer 31b provided on the base steel sheet 31a. The steel sheet 32 may include a base steel sheet 32a and a plating layer 32b provided on the base steel sheet 32a. The type of the base steel sheets 31a and 32a is not particularly limited. The plating layers 31b and 32b cover the whole or substantially the whole of both surfaces of the base steel sheets 31a and 32a, respectively. The plating layers 31b and 32b are metal plating layers. As the plating layers 31b and 32b, the same plating layers as those illustrated for the steel sheet 33 can be used. Specifically, as with the steel sheet 33, the steel sheets 31 and 32 may be an aluminum-plated steel sheet or a zinc-plated steel sheet. When the steel sheet 31 is a plated steel sheet, the sheet thickness t₁ of the steel sheet 31 is the total sheet thickness of the base steel sheet 31a and the plating layer 31b. Similarly, when the steel sheet 32 is a plated steel sheet, the sheet thickness t₂ of the steel sheet 32 is the total sheet thickness of the base steel sheet 32a and the plating layer 32b. The sheet thicknesses t₁ and t₂ are average sheet thicknesses of the steel sheets 31 and 32, respectively.

The plating layers 31b, 32b and 33b are typically a plating layer primarily containing aluminum (aluminum-based plating layer). The configuration of the aluminum-based plating layer is not particularly limited. As the plating layers 31b, 32b and 33b, a well-known aluminum-based plating layer can be used.

Each of the steel sheets 31, 32 and 33 may be the same type of plated steel sheet as the other steel sheets or may be a different type of plated steel sheet than the other steel sheets. At least one of the steel sheets 31, 32 and 33 may be steel sheets without the plating layers on the surfaces thereof (bare materials). When two or more of the steel sheets 31, 32 and 33 are plated steel sheets, the deposition amount (g/m²) of the plating of each steel sheet may be the same as that of the other steel sheets or may be different from that of the other steel sheets.

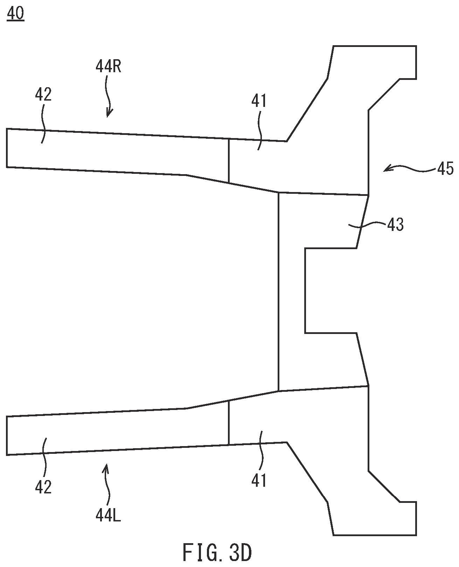

As shown in FIG. 3D, in production of the lower-side structural member 20 (FIG. 1), a blank 40 is prepared in the preparation step. The blank 40 has the shape of the structural member 20 developed. The blank 40 includes a plurality of steel sheets (sub-blanks) 41, 42 and 43. The steel sheets 41, 42 and 43 are disposed and joined to form two elongated parts 44L and 44R and at least one coupling part 45.

The elongated parts 44L and 44R are disposed side by side in the lateral direction in plan view of the blank 40. The elongated part 44L is a part of the blank 40 corresponding to the side frame 21L (FIG. 1). The elongated part 44R is a part of the blank 40 corresponding to the side frame 21R (FIG. 1). In the example in FIG. 3D, the elongated parts 44L and 44R are each formed by the steel sheets 41 and 42.

The coupling part 45 couples the elongated parts 44L and 44R to each other. The coupling part 45 is a part of the blank 40 corresponding to the cross member 22 (FIG. 1). In the example in FIG. 3D, the coupling part 45 includes the steel sheet 43. The coupling part 45 may further include a part of the steel sheets 41.

Concerning the steel sheets 41, 42 and 43, the blank 40 has the same configuration as the blank 30 (FIGS. 3B and 3C). That is, the configuration of the steel sheets 31, 32 and 33 of the blank 30 (FIGS. 3B and 3C) can be applied to the steel sheets 41, 42 and 43 as is. Therefore, the configuration of the steel sheets 41, 42 and 43 will not be described in detail.

### (Heating Step)

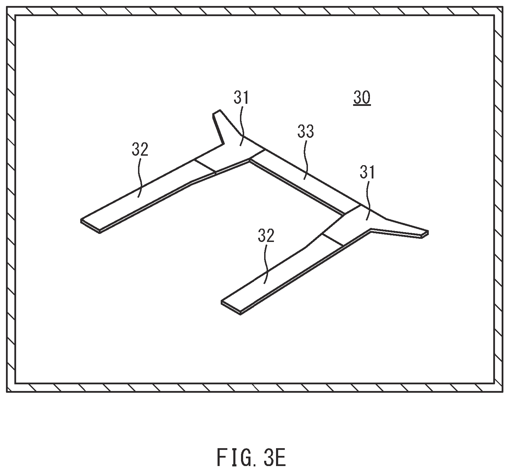

The prepared blanks 30 and 40 are shaped into the structural members 10 and 20 (FIG. 1), respectively, by hot stamping. For hot stamping, the blanks 30 and 40 are subjected to a heating step. With reference to FIG. 3E, in the heating step, the blank 30 is heated in a heating furnace 30, for example. The plurality of steel sheets 31, 32 and 33 included in the blank 30 are heated to an austenite transformation completion temperature (A_{c3} point) or higher. The steel sheets 31, 32 and 33 are heated to 900°C or more, for example. In this way, the microstructure of the steel sheets 31, 32 and 33 is transformed into the austenite phase. Although not shown, in the heating step, the plurality of steel sheets 41, 42 and 43 included in the blank 40 (FIG. 3D) are heated to an austenite transformation completion temperature (A_{c3} point) or higher.

### (Shaping Step)

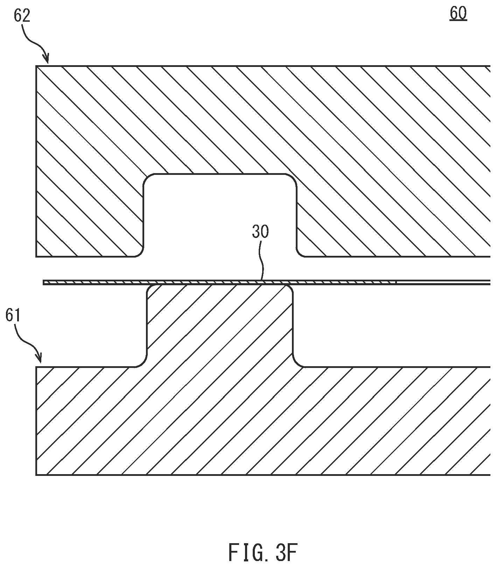

With reference to FIG. 3F, in the shaping step, using press tooling 60, the heated blank 30 is shaped into the structural member 10 (FIG. 1) and quenched. The blank 30 heated in the heating step is removed from the heating furnace and conveyed to the press tooling 60. The press tooling 60 may be attached to a well-known pressing device. The press tooling 60 includes a punch 61 and a die 62, for example. The blank 30 is placed between the punch 61 and the die 62.

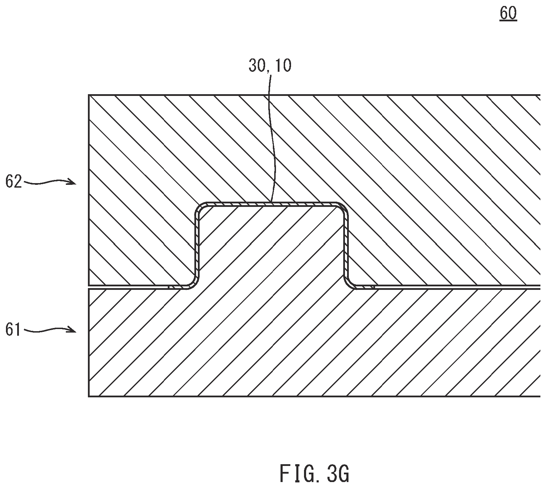

With reference to FIG. 3G, after the blank 30 is placed between the punch 61 and the die 62, the die 62 comes relatively closer to the punch 61. The blank 30 is sandwiched (pressed) between the punch 61 and the die 62 and formed into a shape conforming to the shaping surfaces of the punch 61 and the die 62. The blank 30 is kept being sandwiched between the punch 61 and the die 62. The blank 30 is made to dissipate heat (rapid cooling) in the press tooling 60, and thereby the microstructure thereof is transformed into martensite. In this way, the structural member 10 can be produced from the blank 30.

Although not shown, the blank 40 shown in FIG. 3D is subjected to the same shaping step as for the blank 30. That is, the heated blank 40 is shaped and quenched into the structural member 20 (FIG. 1) with press tooling. The structural member 20 is joined to the structural member 10 (FIG. 1) by welding, for example.

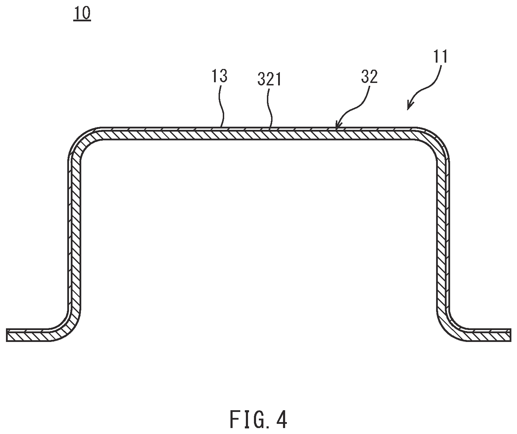

FIG. 4 is a cross-sectional view of the structural member 10 after hot stamping. FIG. 4 shows a cross section of the structural member 10 at the position of the steel sheet 32 (FIG. 3B) that is provided with the film 50 that is black in color at the stage of the blank 30. In the example in FIG. 4, the structural member 10 includes a film 13. The film 13 is provided on the steel sheet 32. The film 50 (FIG. 3B) that is black in color provided to the steel sheet 32 of the blank 30 is changed into the film 13 by hot stamping. Although not shown, the film 50 (FIG. 3B) that is black in color and provided to the steel sheet 31 of the blank 30 is changed into the film 13 by hot stamping. The film 13 is provided on the surfaces 311 and 321 (FIG. 3B) of the steel sheets 31 and 32 that are located on the outer sides of the overlap part 361. When the film 50 before hot stamping contains carbon black, the carbon black substantially disappears while heated at high temperature for hot stamping, although some of the black carbon may remain. When the film 50 before hot stamping satisfies Formula (1) described above, the film 13 after hot stamping may not contain carbon black or may contain 0.500 g/m² or less carbon black. However, when the film 50 before hot stamping satisfies Formula (1) described above, the film 13 after hot stamping preferably contains 0.500 g/m² or less of carbon black. When the film 13 after hot stamping contains carbon black, the content of carbon black in the film 13 is more than 0 g/m², and more preferably 0.001 g/m² or more. When the surfaces 311 and 321 of the steel sheets 31 and 32 before hot stamping are provided with the film 50 (FIG. 3B) such that the film 13 after hot stamping contains carbon black, carbon black exists in the overlap part 361 even in a later stage of the heating step, and the emissivity of the overlap part 361 is ensured, so that the overlap part 361 is easily heated even in the later stage of the heating step. Furthermore, when the steel sheets 31 and 32 are plated steel sheets, if the film 13 after the heating step contains carbon black, in the shaping step (hot stamping) adhesion of the plating layers 31b and 32b (FIG. 3B) to the press tooling 60 is prevented, and the coefficient of friction between the steel sheets 31 and 32 and the press tooling 60 (FIGS. 3F and 3G) can be reduced. Furthermore, when the film 50 before hot stamping satisfies Formula (1) described above, the value calculated by the middle term: 24280/{6700/(100 + 76 × X_{CB}) + 18000/(130 + 65 × X_{Oxide})} for the film 13 after hot stamping is 120.0 or more and 150.0 or less.

When the film 50 (FIG. 3B) before hot stamping satisfies Formula (1) described above, the film 13 after hot stamping contains more than 0 g/m², for example, or more preferably 0.001 g/m² or more, of one or more oxides (metal oxides) selected from among the group consisting of Zr oxide, Zn oxide and Ti oxide. The content of the metal oxide in the film 13 is 0.500 g/m² or less, for example. When the metal oxide remains in the structural member 10 in this way, that is, when the film 13 contains more than 0 g/m² of metal oxide, the corrosion resistance of the structural member 10 is advantageously improved. When the film 50 before hot stamping satisfies Formula (1) described above, the film 13 after hot stamping contains 0 to 0.30 g/m² silica.

The contents of carbon black, metal oxide and silica in the film 13 can be measured in the same manner as the film 50 (FIG. 3B) at the stage of the blank 30. Specifically, an automobile body part is disassembled to obtain the structural member 10, and an analysis specimen is obtained from the structural member 10 by laser cutting, for example. For example, an analysis specimen is obtained from each of the plurality of steel sheets included in the structural member 10. The analysis specimen is, for example, taken from a center part or a vicinity thereof of the top plate of each of the steel sheets having an open cross section. The analysis specimen obtained is adjusted, for example, by polishing the cut surface to a region outside a heat affected zone formed by laser cutting, thereby preparing a film analysis specimen. Using this specimen, surface analysis of the film 13 can be performed by EPMA in terms of an element (such as C) deriving from carbon black or an element (such as Zr, Zn or Ti) deriving from the oxide, thereby checking the dispersion state of the carbon black or metal oxide in the film 13. Depending on the part of the structural member 10, the film 13 exists on the front side and/or the back side of the structural member 10, so that the front side and the back side of the analysis specimen are analyzed.

For example, an electrodeposited film or the like often exists in the outermost layer of the structural member 10. In such a case, a film layer that exists under the electrodeposited film layer and above the alloyed metal plating layer is analyzed. The content X_{CB} of carbon black in the film 13 can be measured by cross-sectional analysis of the film 50 using TEM. Specifically, cross-sectional analysis of a region of the film 13 having a predetermined size (film thickness of the film 13 × 5 µm) is performed by TEM-EDS analysis, and the film thickness of the film 13 and the area fraction of particles having a carbon content of 70 mass% or more in the region are measured. Provided that the density of carbon black is ρ (ton/m³), the film thickness is d (µm), and the area fraction is a (%), the value of ρ × d × a is the content X_{CB} (g/m²) of carbon black. The content X_{Oxide} of the oxide can be determined by performing element analysis of the film layer that exists under the electrodeposited film layer and above the alloyed metal plating layer using the X-ray fluorescence spectrometer described above and quantifying the metal Zr, Zn or Ti.

After the shaping step (hot stamping), the steel sheets 31, 32 and 33 (FIG. 1) can have a tensile strength of 0.5 GPa or more, for example, and preferably have a tensile strength of 1.0 GPa or more. At least one of the steel sheets 31, 32 and 33 may have a tensile strength of 1.5 GPa or more after the shaping step. The tensile strength of each of the steel sheets 31, 32 and 33 may be the same as or different from the tensile strengths of the other steel sheets.

Although not shown, the lower-side structural member 20 (FIG. 1) can also include the same film 13 as the film of the upper-side structural member 10 after hot stamping. In the structural member 20, the film 13 is disposed on the surfaces on both outer sides of the overlap part having the largest sheet thickness tₘₐₓ.

### [Effects]

When the blank 30 is heated for hot stamping, in the steel sheet 33 having the smallest sheet thickness tₘᵢₙ, iron is diffused from the base steel sheet 33a into the plating layer 33b to form a diffusion layer. The diffusion layer increases in thickness as the blank 30 is heated, and the corrosion resistance or weldability provided by the plating layer 33b of the steel sheet 33 may deteriorate. In order to ensure the corrosion resistance and the weldability of the steel sheet 33, the thickness of the diffusion layer is preferably kept to a predetermined value or less. For example, when the steel sheet 33 is a heavy-coating steel sheet having a base weight of the plating layer 33b: approximately 50 to 80 g/m², the thickness of the diffusion layer is preferably 15 µm or less. Furthermore, when the steel sheet 33 is a light-coating steel sheet having a base weight of the plating layer 33b: approximately 40 to 50 g/m², for example, the thickness of the diffusion layer is preferably 10 µm or less. Thus, in the blank 30 according to this embodiment, the emissivity of the surfaces 311 and 321 of the steel sheets 31 and 32 located on the outer sides of the overlap part 361 having the largest sheet thickness tₘₐₓ is higher than the emissivity of at least one of the other surfaces of the steel sheets 31, 32 and 33. That is, the surfaces 311 and 321 of the steel sheets 31 and 32 on both outer sides of the overlap part 361 are subjected to a treatment for increasing the emissivity to be higher than the emissivity of at least one of the other surfaces. In this way, when the blank 30 is heated for hot stamping, the heating rate of the overlap part 361 can be increased, and the heating time of the overlap part 361 can be reduced. Therefore, heating of the blank 30 can be ended, for example, before alloying of the plating layer 33b of the thinnest steel sheet 33, which is more quickly heated than the overlap part, excessively proceeds and the diffusion layer grows over the predetermined thickness. As a result, the strength of the overlap part 361 having the largest sheet thickness tₘₐₓ can be ensured in the hot stamping, and the corrosion resistance (rust resistance) of the structural member 10 can be ensured. In addition, by keeping the thickness of the diffusion layer small, the weldability of the steel sheet 33 is likely to be ensured.

With the blank 30 according to this embodiment, as described above, the heating rate of the overlap part 361 having the largest sheet thickness tₘₐₓ can be increased. Therefore, the whole of the blank 30 can be heated to a temperature required for hot stamping before the alloying of the plating layer 33b of the thinnest steel sheet 33 excessively proceeds, and a process window of the heating condition in the production of the structural member 10 can be ensured. Therefore, the structural member 10 that combines the strength of the overlap part 361 having the largest sheet thickness tₘₐₓ and the rust resistance function of the plating layer 33b can be produced. In addition, by increasing the heating rate of the overlap part 361, the heating time of the blank 30 can be reduced, and therefore, the productivity of the structural member 10 can be improved. In addition, since the heating time of the blank 30 is reduced, the energy consumption in the production of the structural member 10 can be reduced, and the emissions of the greenhouse effect gas during heating can be reduced.

In this embodiment, all of the steel sheets 31, 32 and 33 included in the blank 30 may be plated steel sheets. In that case, when shaping the blank 30 into the structural member 10 by hot stamping, generation of oxide scales can be reduced. Therefore, after the hot stamping, the structural member 10 does not need to be subjected to any treatment for removing oxide scales, such as shot blasting. Therefore, the productivity of the structural member 10 can be improved.

When the plating layers 31b, 32b and 33b of the steel sheets 31, 32 and 33 are aluminum-based plating layers, for example, a difference in heating rate is likely to occur between the overlap part 361 having the largest sheet thickness tₘₐₓ and the steel sheet 33 having the smallest sheet thickness tₘᵢₙ in the heating step. The aluminum-based plating layer is white in color and therefore tends to reflect thermal energy, which inhibits heating of the overlap part 361. However, with the blank 30 according to this embodiment, the surfaces 311 and 321 of the steel sheets 31 and 32 located on both outer sides of the overlap part 361 are subjected to a treatment for increasing the emissivity. Therefore, even if the steel sheets 31 and 32 forming the overlap part 361 are plated steel sheets having an aluminum-based plating layer, heating of the overlap part 361 in the heating step is promoted, and the heating time of the overlap part 361 can be reduced. Therefore, the corrosion resistance and the weldability of the thin steel sheet 33 can be ensured, and the productivity of the structural member 10 can be improved.

In this embodiment, in the heating step, the steel sheet 33 having the smallest sheet thickness tₘᵢₙ in the blank 30 first reaches a temperature in the austenite zone, and then the other parts reach the temperature in the austenite zone in ascending order of the sheet thickness. The overlap part 361 having the largest sheet thickness tₘₐₓ is the last part that reaches the temperature in the austenite zone. When the steel sheets 31, 32 and 33 included in the blank 30 have different sheet thicknesses as in this embodiment, if the smallest sheet thickness tₘᵢₙ and the largest sheet thickness tₘₐₓ are excessively different, the heating of the overlap part 361 having the sheet thickness tₘₐₓ may be substantially delayed compared with the steel sheet 33 having the sheet thickness tₘᵢₙ, and the process window of the heating condition may be unable to be ensured. In view of this, the ratio tₘₐₓ/tₘᵢₙ of the largest sheet thickness tₘₐₓ to the smallest sheet thickness tₘᵢₙ is preferably 3.2 or less. In this way, even if the steel sheets 31, 32 and 33 have different sheet thicknesses, the overlap part 361 can be heated enough for the phase transformation to austenite to complete, before alloying of the plating layer 33b of the thinnest steel sheet 33 proceeds, the diffusion layer becomes thick and the corrosion resistance is lost. Therefore, a process window is likely to be ensured in production of the structural member 10.

In this embodiment, in order to increase the emissivity of the overlap part 361, among both surfaces of each of the steel sheets 31 and 32, the surface 311 of the steel sheet 31 opposite to the steel sheet 32 and the surface 321 of the steel sheet 32 opposite to the steel sheet 31 can be provided with the film 50. The emissivity of the film 50 (at a temperature of 25°C and a wavelength of 8.0 µm) is 60% or more, for example. In this way, the overlap part 361 can be efficiently radiantly heated, and the heating rate of the overlap part 361 in the heating step is likely to be raised.

In this embodiment, the film 50 can contain carbon black, one or more oxides selected from among the group consisting of Zr oxide, Zn oxide and Ti oxide, and 0 to 0.30 g/m² or less silica. The content X_{CB} (g/m²) of carbon black and the content X_{Oxide} (g/m²) of the oxide preferably satisfy Formula (1) described above. As described in Patent Literature 1, Formula (1) is a formula that defines a relationship between the increasing rate (%) of the heating rate (°C/s) and the content X_{CB} of carbon black and the content X_{Oxide} of the oxide. Formula (1) shows that carbon black primarily serves as a heat absorbing material in the range up to 700°C, and the oxide primarily serves as a heat absorbing material in the range of 700°C or more. When the film 50 satisfies Formula (1), the emissivity of the surfaces 311 and 321 on both outer sides of the overlap part 361 provided with the film 50 at a temperature of 25°C and a wavelength of 8.0 µm is likely to be 60% or more.

The carbon black and the oxide can be dispersed over the whole of a surface of the film 50 that is perpendicular to the sheet thickness direction of the steel sheet 31. Therefore, the emissivity of the surfaces 311 and 321 of the steel sheets 31 and 32 on both outer sides of the overlap part 361 is more likely to be uniform. Therefore, in the heating step, the overlap part 361, which is the thickest part, can be quickly and uniformly heated.

However, the configuration of the film 50 is not limited to this. The film 50 can be any film that is substantially black in color in order to increase the emissivity of the surfaces 311 and 321 on both outer sides of the overlap part 361 as compared with the case where the surfaces are not subjected to any treatment. For example, the film 50 may contain graphite, soot or the like, instead of or in addition to carbon black. Alternatively, in order to increase the emissivity of the surfaces 311 and 321 on both outer sides of the overlap part 361, the film 50 may contain an acicular compound having a hexagonal crystal structure having an aspect ratio of 4 or more and 50 or less, for example. Although the compound having a hexagonal crystal structure is typically graphite (C), the compound may be lanthanum silicate, magnesium diboride, beryllium oxide (beryllia), zinc oxide, β-quartz, millerite (NiS), wurtzite (ZnS) or the like.

The lower-side structural member 20 and the blank 40 have the same configurations as the upper-side structural member 10 and the blank 30. Therefore, the lower-side structural member 20 and the blank 40 can have the same effects as those described above.

### <Second Embodiment>

### [Blank]

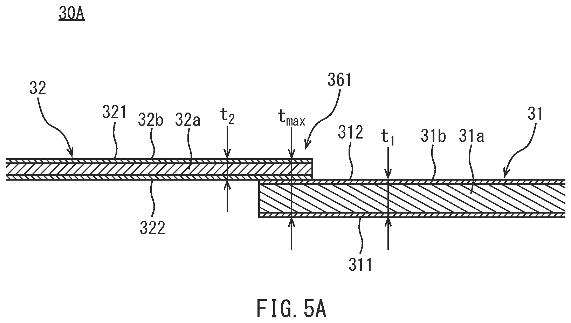

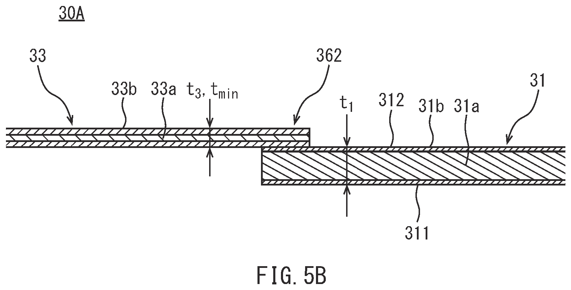

FIGS. 5A and 5B are cross-sectional views of a blank 30A according to a second embodiment. FIGS. 5A and 5B are diagrams corresponding to FIGS. 3B and 3C, which are cross-sectional views of the blank 30 according to the first embodiment. In the first embodiment, in the blank 30 for the structural member 10, the surfaces 311 and 321 located on the outer sides of the overlap part 361 having the largest sheet thickness tₘₐₓ are subjected to a treatment such that the emissivity of the surfaces 311 and 321 is higher than the emissivity of the other surfaces before the heating step. In the first embodiment, the film 50 for increasing the emissivity is formed on the surfaces 311 and 321 on both outer sides of the overlap part 361 (FIG. 3B). On the other hand, according to this embodiment, in the blank 30A, surfaces 311 and 321 located on the outer sides of an overlap part 361 are subjected to a treatment such that the emissivity of the surfaces 311 and 321 is higher than the emissivity of the other surfaces during the heating step.

With reference to FIGS. 5A and 5B, in this embodiment, steel sheets 31, 32 and 33 are plated steel sheets. More specifically, all of the steel sheets 31, 32 and 33 are aluminum-plated steel sheets. That is, plating layers 31b, 32b and 33b of the steel sheets 31, 32 and 33 are aluminum-based plating layers. In the steel sheet 31, the aluminum-based plating layer 31b covers both surfaces of a base steel sheet 31a. The aluminum-based plating layer 31b is provided over the whole or substantially the whole of both surfaces of the base steel sheet 31a. Similarly, in the steel sheet 32, the aluminum-based plating layer 32b covers both surfaces of a base steel sheet 32a. The aluminum-based plating layer 32b is provided over the whole or substantially the whole of both surfaces of the base steel sheet 32a. Furthermore, in the steel sheet 33, the aluminum-based plating layer 33b covers both surfaces of a base steel sheet 33a. The aluminum-based plating layer 33b is provided over the whole or substantially the whole of both surfaces of the base steel sheet 33a.

The chemical composition of the aluminum-based plating layers 31b, 32b and 33b is not particularly limited. As in the first embodiment, as the aluminum-based plating layers 31b 32b and 33b, well-known aluminum-based plating layers (plating layers primarily containing aluminum) can be used. Although this is not intended to be limiting, the aluminum-based plating layers 31b, 32b and 33b are Al-Si-based plating layers, for example. Each of the aluminum-based plating layers 31b, 32b and 33b may be the same as or different from the aluminum-based plating layers of the other steel sheets.

The steel sheets 31 and 32 form the overlap part 361 having the largest sheet thickness tₘₐₓ in the blank 30A. A deposition amount W1 (g/m²) of the aluminum-based plating layer 31b of the steel sheet 31 is less than a deposition amount W3 (g/m²) of the aluminum-based plating layer 33b of the other steel sheet 33. A deposition amount W2 (g/m²) of the aluminum-based plating layer 32b of the steel sheet 32 is also less than the deposition amount W3 of the aluminum-based plating layer 33b of the other steel sheet 33.

In the steel sheet 31, the deposition amount W1 is the deposition amount of the aluminum-based plating layer 31b for both surfaces of the base steel sheet 31a, and is an average deposition amount for both surfaces of the base steel sheet 31a. Typically, the deposition amount (g/m²) of the aluminum-based plating layer 31b on one surface of the base steel sheet 31a is substantially equal to the deposition amount (g/m²) of the aluminum-based plating layer 31b on the other surface of the base steel sheet 31a. However, depending on the production conditions, for example, the deposition amount of the aluminum-based plating layer 31b may vary between the front and back surfaces of the base steel sheet 31a. That is, the deposition amount of the aluminum-based plating layer 31b may vary between one surface and the other surface of the base steel sheet 31a. Similarly, in the steel sheet 32, the deposition amount W2 is the deposition amount of the aluminum-based plating layer 32b for both surfaces of the base steel sheet 32a, and is an average deposition amount for both surfaces of the base steel sheet 32a. Typically, the deposition amount (g/m²) of the aluminum-based plating layer 32b on one surface of the base steel sheet 32a is substantially equal to the deposition amount (g/m²) of the aluminum-based plating layer 32b on the other surface of the base steel sheet 32a. However, depending on the production conditions, for example, the deposition amount of the aluminum-based plating layer 32b may vary between the front and back surfaces of the base steel sheet 32a. That is, the deposition amount of the aluminum-based plating layer 32b may vary between one surface and the other surface of the base steel sheet 32a. Furthermore, in the steel sheet 33, the deposition amount W3 is the deposition amount of the aluminum-based plating layer 33b for both surfaces of the base steel sheet 33a, and is an average deposition amount for both surfaces of the base steel sheet 33a. Typically, the deposition amount (g/m²) of the aluminum-based plating layer 33b on one surface of the base steel sheet 33a is substantially equal to the deposition amount (g/m²) of the aluminum-based plating layer 33b on the other surface of the base steel sheet 33a. However, depending on the production conditions, for example, the deposition amount of the aluminum-based plating layer 33b may vary between the front and back surfaces of the base steel sheet 33a. That is, the deposition amount of the aluminum-based plating layer 33b may vary between one surface and the other surface of the base steel sheet 33a.

The deposition amounts W1 and W2 of the aluminum-based plating layers 31b and 32b of the steel sheets 31 and 32 are each 60 g/m² or less, and preferably 50 g/m² or less. For example, the deposition amounts W1 and W2 are 10 g/m² or more, and preferably 20 g/m² or more. The deposition amount W3 of the aluminum-based plating layer 33b of the steel sheet 33 is 20 g/m² or more and 120 g/m² or less, for example. W3 is preferably 30 g/m² or more, and more preferably 35 g/m² or more. However, the deposition amount W3 is more than the deposition amounts W1 and W2. The deposition amount W3 is preferably 115 g/m² or less, and more preferably 100 g/m² or less. The difference between the deposition amount W1 of the aluminum-based plating layer 31b of the steel sheet 31 and the deposition amount W3 of the aluminum-based plating layer 33b of the steel sheet 33: W3 - W1 is 20 (g/m²) or more, for example. W3 - W1 may be 80 (g/m²) or less. Similarly, the difference between the deposition amount W2 of the aluminum-based plating layer 32b of the steel sheet 32 and the deposition amount W3 of the aluminum-based plating layer 33b of the steel sheet 33: W3 - W2 is 20 (g/m²) or more, for example. W3 - W2 may be 80 (g/m²) or less.

As described above, in the steel sheet 31, the deposition amount of the aluminum-based plating layer 31b may vary between the front and back surfaces of the base steel sheet 32a. That is, in the steel sheet 31, the deposition amount of the aluminum-based plating layer 31b may vary between the surfaces 311 and 312. In this case, in the steel sheet 31, the deposition amount of the aluminum-based plating layer 31b on the surface 311 located on the outer side of the overlap part 361 is preferably less than the deposition amount of the aluminum-based plating layer 31b on the surface 312 located on the inner side of the overlap part 361. The difference between the deposition amount of the aluminum-based plating layer 31b on the surface 311 and the deposition amount of the aluminum-based plating layer 31b on the surface 312 is 1 g/m² or more, for example. The difference between the deposition amount of the aluminum-based plating layer 31b on the surface 311 and the deposition amount of the aluminum-based plating layer 31b on the surface 312 may be 10 g/m² or less.

Similarly, in the steel sheet 32, the deposition amount of the aluminum-based plating layer 32b may vary between the front and back surfaces of the base steel sheet 32a. That is, in the steel sheet 32, the deposition amount of the aluminum-based plating layer 32b may vary between the surfaces 321 and 322. In this case, in the steel sheet 32, the deposition amount of the aluminum-based plating layer 32b on the surface 321 located on the outer side of the overlap part 361 is preferably less than the deposition amount of the aluminum-based plating layer 32b on the surface 322 located on the inner side of the overlap part 361. The difference between the deposition amount of the aluminum-based plating layer 32b on the surface 321 and the deposition amount of the aluminum-based plating layer 32b on the surface 322 is 1 g/m² or more, for example. The difference between the deposition amount of the aluminum-based plating layer 32b on the surface 321 and the deposition amount of the aluminum-based plating layer 32b on the surface 322 may be 10 g/m² or less.

Although the method of forming the aluminum-based plating layers 31b, 32b and 33b on the base steel sheets 31a, 32a and 33a, respectively, is not particularly limited, a common hot dipping method is used, for example. Specifically, the aluminum-plated steel sheet 31 with the deposition amount W1 of the aluminum-based plating layer 31b adjusted can be obtained by immersing the base steel sheet 31a in a molten aluminum plating bath and then performing gas wiping with nitrogen or air, for example. Similarly, the aluminum-plated steel sheet 32 with the deposition amount W2 of the aluminum-based plating layer 32b adjusted can be obtained by immersing the base steel sheet 32a in a molten aluminum plating bath and then performing gas wiping with nitrogen or air, for example. Furthermore, the aluminum-plated steel sheet 33 with the deposition amount W3 of the aluminum-based plating layer 33b adjusted can be obtained by immersing the base steel sheet 33a in a molten aluminum plating bath and then performing gas wiping with nitrogen or air, for example. When forming the aluminum-based plating layer in the hot dipping method, an Al-Fe-based alloy layer is formed at the interface between the base steel sheet and the aluminum-based plating layer as a result of elution of Fe during the hot dipping process.

The method of measuring the deposition amounts W1, W2 and W3 of the aluminum-based plating layers 31b, 32b and 33b may be the sodium hydroxide and hexamethylenetetramine-hydrochloric acid peel weight measuring method described in JIS G 3314: 2019, for example. Specifically, according to JIS G 3314: 2019, five or more test specimens having a predetermined surface area S (mm²) (such as 50 mm × 50 mm) are taken from each of the steel sheets 31, 32 and 32 of the blank 30A, and the weight w1 (g) of each test specimen is measured. Then, each test specimen is immersed in a sodium hydroxide solution, and after it is ascertained that the gasification due to the dissolution of the plating ends, the test specimen is removed from the sodium hydroxide solution and rinsed with water. Then, each test specimen still wet after the rinsing is immersed in a hydrochloric acid solution supplemented with hexamethylenetetramine until the gasification due to the dissolution of the plating ends. Each test specimen removed from the hexamethylenetetramine-hydrochloric acid solution is immediately rinsed with water and dried, and the weight w2 (g) of the test specimen is measured again. The deposition amount W (g/m²) of the aluminum-based plating layer of each test specimen can be determined according to {(w1 - w2)/S} × 10⁶. An average value of the deposition amounts W of the five or more test specimens taken from each steel sheet is regarded as the deposition amount of the aluminum-based plating layer of the steel sheet.

However, when the test specimen taken from each of the steel sheets 31, 32 and 33 is small in size, the cross section of each of the aluminum-based plating layers 31b, 32b and 33b is observed with an optical microscope (area: 100 µm × 100 µm), the thickness (µm) of the plating layer is measured in three visual fields in the same manner, and an average value of the thicknesses measured in the three visual fields can be converted into the deposition amount by multiplying the average value by three. In this case, for each of the steel sheets 31, 32 and 33, the deposition amount of the aluminum-based plating layer 31b, 32b or 33b on each surface can be calculated. Average values (average values for both surfaces) of the deposition amounts calculated for the steel sheets 31, 32 and 33 are regarded as the deposition amounts W1, W2 and W3 of the aluminum-based plating layer, respectively. When there is an Al-Fe-based alloy layer at the interface between the base steel sheet and the aluminum-based plating layer, the thickness of the aluminum-based plating layer includes the thickness of the Al-Fe-based alloy layer. The thicknesses of the aluminum-based plating layers 31b and 32b of the steel sheets 31 and 32 forming the overlap part 361 having the largest thickness are smaller than the thickness of the aluminum-based plating layer 33b of the other steel sheet 33. The thickness of the aluminum-based plating layer 31b of the steel sheet 31 may be equal to or different from the thickness of the aluminum-based plating layer 32b of the steel sheet 32.

In the blank 30A according to this embodiment, when the plurality of steel sheets 31, 32 and 33 have different sheet thicknesses t₁, t₂ and t₃, the ratio of the largest sheet thickness tₘₐₓ to the smallest sheet thickness tₘᵢₙ in the blank 30A: tₘₐₓ/tₘᵢₙ is more than 2.0. In this case, the largest sheet thickness tₘₐₓ and the smallest sheet thickness tₘᵢₙ satisfy a relation that tₘₐₓ/tₘᵢₙ ≤ 4.0, for example, and preferably satisfy a relation that tₘₐₓ/tₘᵢₙ ≤ 3.0. The largest sheet thickness tₘₐₓ and the smallest sheet thickness tₘᵢₙ may satisfy a relation that tₘₐₓ/tₘᵢₙ ≥ 2.5. The largest sheet thickness tₘₐₓ is 4.6 mm or less, for example. The sheet thickness tₘₐₓ may be 1.6 mm or more.

### [Structural Member]

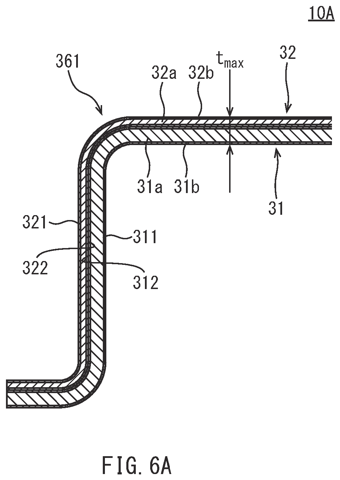

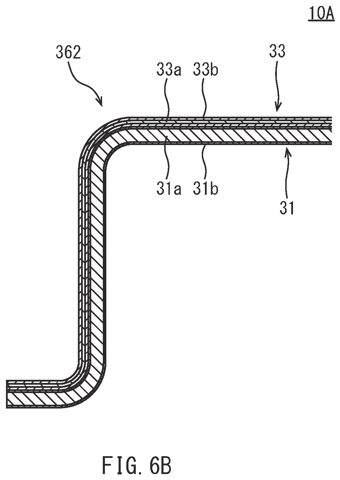

The blank 30A is subjected to the same heating step and shaping step as those in the first embodiment. Therefore, as shown in FIGS. 6A and 6B, a structural member 10A similar to the structural member according to the first embodiment is produced from the blank 30A. FIGS. 6A and 6B are cross-sectional views of the structural member 10A after the shaping step (hot stamping). FIG. 6A shows a cross section of the structural member 10A at the position of the overlap part 361 having the largest sheet thickness tₘₐₓ. FIG. 6B shows a cross section of the structural member 10A at the position of the other overlap part 362.

Referring to FIG. 6A, in the structural member 10A after hot stamping, again, the steel sheet 31 is a plated steel sheet having the aluminum-based plating layer 31b on both surfaces of the base steel sheet 31a. Similarly, the steel sheet 32 is a plated steel sheet having the aluminum-based plating layer 32b on both surfaces of the base steel sheet 32a. Referring to FIG. 6B, the steel sheet 33 is a plated steel sheet having the aluminum-based plating layer 33b on both surfaces of the base steel sheet 33a. However, in the aluminum-based plating layers 31b, 32b and 33b in the structural member 10A, alloying with iron has more significantly proceeded in the heating step compared with the blank 30A (FIGS. 5A and 5B).

Referring to FIGS. 6A and 6B, thicknesses K1 and K2 of the aluminum-based plating layers 31b and 32b of the steel sheets 31 and 32 forming the overlap part 361 having the largest thickness are less than a thickness K3 of the aluminum-based plating layer 33b of the other steel sheet 33. The thickness K1 is an average thickness of the aluminum-based plating layers 31b on both surfaces of the base steel sheet 31a of the steel sheet 31. The thickness K2 is an average thickness of the aluminum-based plating layers 32b on both surfaces of the base steel sheet 32a of the steel sheet 32. The thickness K3 is an average thickness of the aluminum-based plating layers 33b on both surfaces of the base steel sheet 33a of the steel sheet 33. The difference between the thickness K1 of the aluminum-based plating layer 31b of the steel sheet 31 and the thickness K3 of the aluminum-based plating layer 33b of the steel sheet 33: K3 - K1 is 7 (µm) or more, for example. K3 - K1 may be 33 (µm) or less. Similarly, the difference between the thickness K2 of the aluminum-based plating layer 32b of the steel sheet 32 and the thickness K3 of the aluminum-based plating layer 33b of the steel sheet 33: K3 - K2 is 7 (µm) or more, for example. K3 - K2 may be 33 (µm) or less. The thickness K1 of the aluminum-based plating layer 31b of the steel sheet 31 may be equal to or different from the thickness K2 of the aluminum-based plating layer 32b of the steel sheet 32.

When in the blank 30 (FIGS. 3A and 3B) before hot stamping, the deposition amount of the aluminum-based plating layer 31b on the surface 311 of the steel sheet 31 located on the outer side of the overlap part 361 is less than the deposition amount of the aluminum-based plating layer 31b on the surface 312 located on the inner side of the overlap part 361, the thickness of the aluminum-based plating layer 31b on the surface 311 in the structural member 10A after hot stamping is also less than the thickness of the aluminum-based plating layer 31b on the surface 312. The difference in thickness of the aluminum-based plating layer between the surfaces 311 and 312 is 0.3 µm or more, for example. The difference in thickness of the aluminum-based plating layer between the surfaces 311 and 312 may be 3.0 µm or less, for example. Similarly, when in the blank 30 before hot stamping, the deposition amount of the aluminum-based plating layer 32b on the surface 321 of the steel sheet 32 located on the outer side of the overlap part 361 is less than the deposition amount of the aluminum-based plating layer 32b on the surface 322 located on the inner side of the overlap part 361, the thickness of the aluminum-based plating layer 32b on the surface 321 in the structural member 10A after hot stamping is also less than the thickness of the aluminum-based plating layer on the surface 322. The difference in thickness of the aluminum-based plating layer 32b between the surfaces 321 and 322 is 0.3 µm or more, for example. The difference in thickness of the aluminum-based plating layer between the surfaces 321 and 322 may be 3.0 µm or less, for example.

The thicknesses K1, K2 and K3 of the aluminum-based plating layers 31b, 32b and 33b in the structural member 10A can be measured as follows. That is, the automobile body is disassembled to obtain the structural member 10A, and an analysis specimen is obtained from the structural member 10A by laser cutting, for example. For example, an analysis specimen is obtained from each of the plurality of steel sheets included in the structural member 10A. The analysis specimen is taken from a center part or a vicinity thereof of the top sheet of each of the steel sheets having an open cross section. For the test specimen taken from each of the plurality of steel sheets, the cross section of the aluminum-based plating layer is etched with nital and then observed with an optical microscope (area: 100 µm × 100 µm), and the thickness of the plating layer is measured in three visual fields. The thickness of the plating layer can be measured for each surface of the steel sheets 31, 32 and 33. For each of the steel sheets 31, 32, and 33, an average value of the thicknesses of the plating layer on both surfaces measured in the three visual fields can be regarded as the plating thickness, denoted as K1, K2 and K3 for the steel sheets 31, 32 and 33, respectively. In the outermost layer of the structural member 10A, there is often an electrodeposition film or the like. In such a case, the plating layer that exists on the base steel sheet and under the electrodeposition film layer is observed.

Referring to FIG. 6A, in the structural member 10A, the overlap part 361 having the largest sheet thickness tₘₐₓ is a juncture between the two adjacent steel sheets 31 and 32. Provided that for one of the steel sheets 31 and 32 that is located on the front surface-side of the structural member 10A, the largest value of Vickers hardness is denoted as HVₘₐₓ, and the smallest value of Vickers hardness is denoted as HVₘᵢₙ, HVₘₐₓ - HVₘᵢₙ is 30% or less of HVₘₐₓ, for example. In this embodiment, the steel sheets 31 and 32 having a relatively thin plating are joined to each other to form the overlap part 361 and then subjected to hot stamping. In the overlap part 361 after hot stamping, of the steel sheets 31 and 32, at least the largest value HVₘₐₓ and the smallest value HVₘᵢₙ of Vickers hardness of the steel sheet disposed on the front surface-side of the structural member 10A satisfy a relation that HVₘₐₓ - HVₘᵢₙ ≤ HVₘₐₓ × 30%. In this embodiment, the steel sheet 32 is disposed on the front surface-side (outer side) of the structural member 10A compared with the steel sheet 31. However, the steel sheet 31 may be disposed on the front surface-side (outer side) of the structural member 10A compared with the steel sheet 32.

The largest value HVₘₐₓ and the smallest value HVₘᵢₙ of Vickers hardness of the overlap part 361 can be measured as follows. First, a test specimen that includes a cross section of one of the steel sheets 31 and 32 located on the front surface-side of the structural member 10A in the overlap part 361 is taken from the structural member 10A by laser cutting. Then, according to JIS Z 2244: 2020, the cross section of the steel sheet (base steel sheet) is prepared as a test surface, and on the test surface, the Vickers hardness test is conducted at arbitrary thirty points spaced apart from each other by at least the total sheet thickness of the overlap part 361 under conditions that the test force is 10 kgf (98.07 N) and the retention time of the test force is 10 s. Of the thirty Vickers hardnesses (HV) obtained in this way, the largest Vickers hardness can be regarded as HVₘₐₓ, and the smallest Vickers hardness can be regarded as HVₘᵢₙ.

Referring to FIG. 6B, in the structural member 10A, the overlap part 362 is a juncture between the two adjacent steel sheets 31 and 33. As with the overlap part 361 having the largest thickness, provided that the largest value of Vickers hardness is denoted as HVₘₐₓ, and the smallest value of Vickers hardness is denoted as HVₘᵢₙ for the overlap part 362, HVₘₐₓ - HVₘᵢₙ is 30% or less of HVₘₐₓ, for example. In the production method according to this embodiment, the steel sheets 31 and 33 are subjected to hot stamping after the overlap part 362 is formed. In the overlap part 362 after hot stamping, the largest value HVₘₐₓ and the smallest value HVₘᵢₙ of Vickers hardness may satisfy a relation that HVₘₐₓ - HVₘᵢₙ ≤ HVₘₐₓ × 30%.

The largest value HVₘₐₓ and the smallest value HVₘᵢₙ of Vickers hardness of the overlap part 362 are measured on one of the steel sheets 31 and 33 that is located on the front surface-side of the structural member 10A in the overlap part 362. The largest value HVₘₐₓ and the smallest value HVₘᵢₙ of Vickers hardness of the overlap part 362 can be measured in the same manner as the overlap part 361.

Although not shown, the blank 40 (FIGS. 1 and 3D) for the structural member 20 can have the same configuration as the blank 30A. That is, the configuration of the steel sheets 31, 32 and 33 of the blank 30A can be applied to the steel sheets 41, 42 and 43 of the blank 40 (FIG. 3D) as is. In this case, in the structural member 20 produced from the blank 40 through the heating step and the shaping step, the steel sheets 41, 42 and 43 have the same configuration as the steel sheets 31, 32 and 33 of the structural member 10A shown in FIGS. 6A and 6B.

### [Effects]

In the blank 30A according to this embodiment, the deposition amounts W1 and W2 of the aluminum-based plating layers 31b and 32b on the base steel sheets 31a and 32a of the steel sheets 31 and 32 forming the overlap part 361 having the largest sheet thickness tₘₐₓ are less than the deposition amount W3 of the aluminum-based plating layer 33b on the base steel sheet 33a of the other steel sheet 33. The deposition amounts W1 and W2 are 60 g/m² or less. As a result, when the blank 30A is heated for hot stamping, the heating rate of the overlap part 361 can be increased, and the heating time of the overlap part 361 can be reduced. Specifically, since the aluminum-based plating layers 31b and 32b forming the outermost layers of the steel sheets 31 and 32 are as thin as 60 g/m² or less in deposition amount, alloying of the aluminum-based plating layers 31b and 32b with the iron contained in the base steel sheets 31a and 32a quickly proceeds to the surfaces of the steel sheets 31 and 32 when the blank 30A is heated, and both surfaces of the steel sheets 31 and 32 including the overlap part 361 relatively quickly change color to black or similar color. Therefore, the emissivity of the surfaces 311 and 321 on both outer sides of the overlap part 361 can be increased to accelerate the heating, and the heating time of the overlap part 361 can be reduced. Therefore, heating of the blank 30A can be ended before alloying of the aluminum-based plating layers 31b, 32b and 33b of the steel sheets 31, 32 and 33 excessively proceeds and the diffusion layer grows beyond a predetermined thickness. As a result, the strength of the overlap part 361 having the largest sheet thickness tₘₐₓ can be ensured by hot stamping, and the corrosion resistance (rust resistance) of the structural member 10A can be ensured. In addition, since the thickness of the diffusion layer is reduced, the weldability of the steel sheets 31, 32 and 33 is more likely to be ensured.

As described above, with the blank 30A according to this embodiment, the heating rate of the overlap part 361 having the largest sheet thickness tₘₐₓ can be increased. Therefore, the whole of the blank 30A can be heated to a temperature required for hot stamping before alloying of the aluminum-based plating layers 31b, 32b and 33b of the steel sheets 31, 32 and 33 excessively proceeds, and a process window of the heating condition in production of the structural member 10A can be ensured. Therefore, the structural member 10A produced can combine the strength of the overlap part 361 having the largest sheet thickness tₘₐₓ and the rust resistance function of each of the steel sheets 31, 32 and 33. Furthermore, since the heating rate of the overlap part 361 is increased, the heating time of the blank 30A can be reduced, so that the productivity of the structural member 10A can be improved. Furthermore, since the heating time of the blank 30A is reduced, the energy consumption in the production of the structural member 10A can be reduced, and the emissions of the greenhouse effect gas during heating can be reduced.

According to this embodiment, the deposition amount W3 of the aluminum-based plating layer 33b of the steel sheet 33 is more than those of the steel sheets 31 and 32 forming the overlap part 361 having the largest thickness. That is, the steel sheet 33 has a higher rust resistance than the steel sheets 31 and 32. However, the arrangement of the steel sheets 31, 32 and 33 is not limited to the example according to this embodiment. The steel sheet 33 having a relatively thick plating may be disposed at a position where high rust resistance is required in the structural member 10A.

According to this embodiment, the deposition amounts W1 and W2 of the aluminum-based plating layers 31b and 32b of the steel sheets 31 and 32 may be the same or different. However, from the viewpoint of uniformly heating the blank 30A, the deposition amount W1 of the aluminum-based plating layer 31b of the steel sheet 31 is preferably substantially equal to the deposition amount W2 of the aluminum-based plating layer 32b of the steel sheet 32.

In the steel sheet 31, the deposition amount of the aluminum-based plating layer 31b on the surface 311 located on the outer side of the overlap part 361 is preferably less than the deposition amount of the aluminum-based plating layer 31b on the surface 312 located on the inner side of the overlap part 361. Furthermore, in the steel sheet 32, the deposition amount of the aluminum-based plating layer 32b on the surface 321 located on the outer side of the overlap part 361 is preferably less than the deposition amount of the aluminum-based plating layer 32b on the surface 322 located on the inner side of the overlap part 361. If the deposition amounts of the aluminum-based plating layers 31b and 32b on the surfaces 311 and 321 on the outer sides of the overlap part 361 are smaller, the heating of the overlap part 361 is more likely to be promoted, and the heating time of the overlap part 361 is more likely to be reduced.

According to this embodiment, in the heating step, the steel sheet 33 having the smallest sheet thickness tₘᵢₙ in the blank 30A first reaches a temperature in the austenite zone, and then the other parts reach the temperature in the austenite zone in ascending order of the sheet thickness. The overlap part 361 having the largest sheet thickness tₘₐₓ is the last part that reaches the temperature in the austenite zone. When the steel sheets 31, 32 and 33 included in the blank 30A have different sheet thicknesses as in this embodiment, if the smallest sheet thickness tₘᵢₙ and the largest sheet thickness tₘₐₓ are excessively different, the heating of the overlap part 361 having the sheet thickness tₘₐₓ may be substantially delayed compared with the steel sheet 33 having the sheet thickness tₘᵢₙ, and the process window of the heating condition may be unable to be ensured. In view of this, the ratio tₘₐₓ/tₘᵢₙ of the largest sheet thickness tₘₐₓ to the smallest sheet thickness tₘᵢₙ is preferably 3.0 or less. In this way, even if the steel sheets 31, 32 and 33 have different sheet thicknesses, the overlap part 361 can be heated enough for the phase transformation to austenite to complete, before alloying of the plating layer 33b of the thinnest steel sheet 33 proceeds and the corrosion resistance is lost. Therefore, the process window is likely to be ensured in production of the structural member 10A.

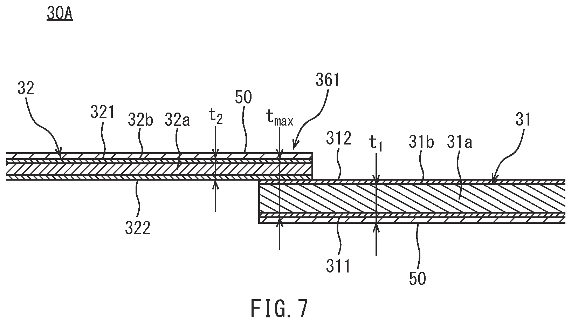

As shown in FIG. 7, according to this embodiment, the overlap part 361 having the largest thickness may be provided with the same film 50 as in the first embodiment. That is, the surfaces 311 and 321 located on the outer sides of the overlap part 361 of the steel sheets 31 and 32 may be coated with the film 50 that is substantially black in color. In the example shown in FIG. 7, the surfaces 311 and 321 of the steel sheets 31 and 32 are coated with the film 50. In the steel sheet 31, the whole of the surface 311 on the opposite side to the other steel sheet 32 is coated with the film 50. In the steel sheet 32, the whole of the surface on the opposite side to the other steel sheet 31 is coated with the film 50. That is, the surfaces 311 and 321 of the steel sheets 31 and 32 that form the front and back surfaces of the overlap part 361 are each coated with the film 50.

By the film 50 that is substantially black in color, the emissivity of each of the surfaces 311 and 321 of the steel sheets 31 and 32 located on the outer sides of the overlap part 361 can be previously increased. As a result, when the blank 30A is heated for hot stamping, the overlap part 361 can be more quickly heated. Therefore, even if the difference in sheet thickness between the overlap part 361 having the largest sheet thickness tₘₐₓ in the blank 30A and the steel sheet 33 having the smallest sheet thickness tₘᵢₙ is greater, for example, the process window of the heating condition is likely to be ensured.

In the blank 30A shown in FIG. 7, the ratio tₘₐₓ/tₘᵢₙ of the largest sheet thickness tₘₐₓ to the smallest sheet thickness tₘᵢₙ is 2.5 or more, for example. tₘₐₓ/tₘᵢₙ may be more than 3.0. In the example in FIG. 7, since the emissivity of the overlap part 361 is previously increased by the film 50 that is substantially black in color, when the blank 30A is heated for hot stamping, the heating of the overlap part 361 is further accelerated. Therefore, when tₘₐₓ/tₘᵢₙ is high, for example, when tₘₐₓ/tₘᵢₙ is more than 3.0, the heating of the overlap part 361 having the largest sheet thickness is likely to be completed before alloying of the aluminum-based plating layer 33b of the thinnest steel sheet 33 excessively proceeds, and the process window of the heating condition can be ensured. From the viewpoint of ensuring the process window of the heating condition with higher reliability, the largest sheet thickness tₘₐₓ and the smallest sheet thickness tₘᵢₙ in the blank 30A preferably satisfy a relation that tₘₐₓ/tₘᵢₙ ≤ 4.0.

In the example in FIG. 7, in each of the steel sheets 31 and 32, the surface located on the outer side of the overlap part 361 is coated with the film 50. However, the surface located on the outer side of the overlap part 361 of only one of the steel sheets 31 and 32 may be coated with the film 50. Furthermore, in the example in FIG. 7, the surfaces 312 and 322 of the steel sheets 31 and 32 located on the inner side of the overlap part 361 are not coated with the film 50. However, the surface located on the inner side of the overlap part 361 of at least one of the steel sheets 31 and 32 may be coated with the film 50. However, from the viewpoint of uniformly heating the blank 30A for hot stamping, the surfaces 311 and 321 of the steel sheets 31 and 32 located on the outer sides of the overlap part 361 are preferably coated with the film 50, and the surfaces 312 and 322 of the steel sheets 31 and 32 located on the inner side of the overlap part 361 are preferably not coated with the film 50.

The lower-side structural member 20 (FIG. 1) and the blank 40 (FIG. 3D) can have the same configuration as the upper-side structural member 10A and the blank 30A according to this embodiment. Therefore, the lower-side structural member 20 and the blank 40 can also have the same effects as those described above.

### <Third Embodiment>

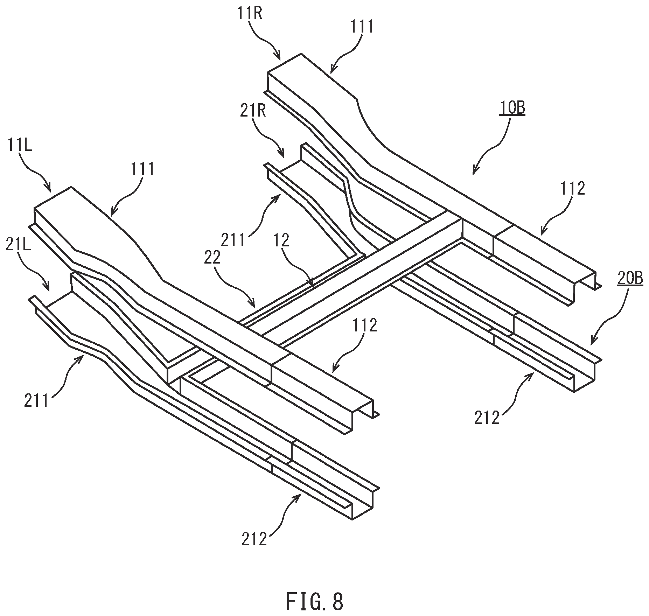

FIG. 8 is an exploded perspective view of structural members 10B and 20B according to a third embodiment. The structural members 10, 10A and 20 according to the first and second embodiments form a lower front module of a vehicle body. On the other hand, the structural members 10B and 20B according to this embodiment form a lower rear module of a vehicle body.

Referring to FIG. 8, the structural member 10B includes a pair of side frames 11L and 11R and at least one cross member 12, as in the embodiments described above. The structural member 20B also includes a pair of side frames 21L and 21R and at least one cross member 22, as in the embodiments described above. In the example shown in FIG. 8, the cross member 12 couples the side frames 11L and 11R to each other at middle parts thereof. Similarly, the cross member 22 couples the side frames 21L and 21R to each other at middle parts thereof. The configurations of the structural members 10 and 10A and the structural member 20 according to the first and second embodiments described above can be applied to the structural member 10B and the structural member 20B according to this embodiment, respectively.

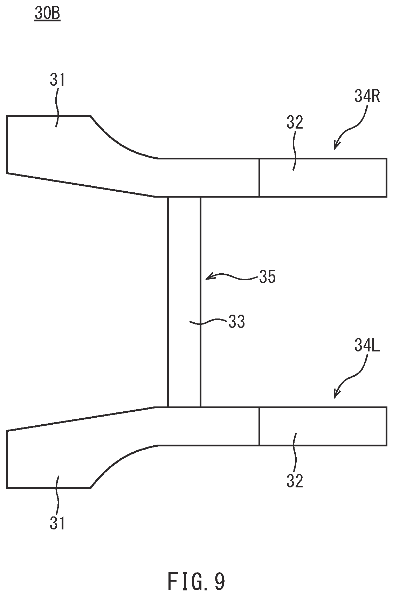

The structural member 10B can be produced from a blank 30B shown in FIG. 9 in the same production method as the production method according to the first embodiment described above. The blank 30B includes steel sheets 31, 32 and 33. The steel sheets 31, 32 and 33 are disposed and joined to form two elongated parts 34L and 34R and at least one coupling part 35. The blank 30B can have the same configuration as the blank 30 or 30A (FIGS. 3B and 3C or FIGS. 5A and 5B) according to the other embodiments described above.

According to this embodiment, the steel sheet 32 forming a rear part 112 (FIG. 8) of each of the side frames 11L and 11R may be smaller than the steel sheet 31 forming a front part 111 (FIG. 8) in at least one of sheet thickness and tensile strength. In the structural member 10B according to this embodiment and the structural members 10 and 10A according to the embodiments described above (FIGS. 1, 6A and 6B), the sheet thickness and/or tensile strength of a steel sheet located on the outer side of the vehicle body in the front-and-rear direction is preferably smaller than the sheet thickness and/or tensile strength of a steel sheet located on the inner side of the vehicle body. In this way, when an impact load in the front-and-rear direction is applied to the vehicle body, the part of the structural member 10, 10A or 10B located on the outer side of the vehicle body is deformed to absorb the impact energy, while the part located on the inner side of the vehicle body is less likely to be deformed so that peripheral components can be protected.

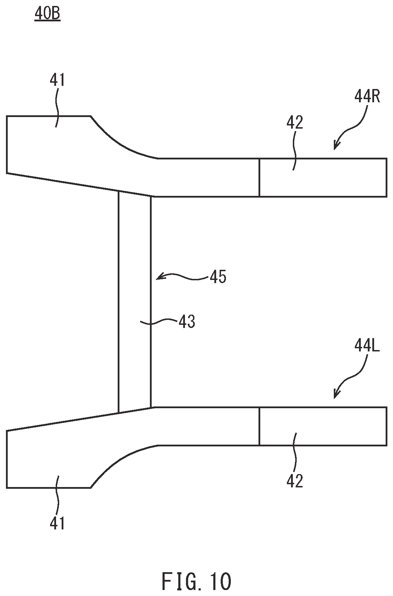

The structural member 20B can be produced from a blank 40B shown in FIG. 10 in the same production method as the production method according to the first embodiment described above. The blank 40B includes steel sheets 41, 42 and 43. The steel sheets 41, 42 and 43 are disposed and joined to form two elongated parts 44L and 44R and at least one coupling part 45. The blank 40B can have the same configuration as the blank 30 or 30A (FIGS. 3B and 3C or FIGS. 5A and 5B) according to the other embodiments described above.

According to this embodiment, the steel sheet 42 forming a rear part 212 (FIG. 8) of each of the side frames 21L and 21R may be smaller than the steel sheet 41 forming a front part 211 (FIG. 8) in at least one of sheet thickness and tensile strength. In the lower-side structural members 20 and 20B (FIGS. 1 and 8), as with the upper-side structural members, the sheet thickness and/or tensile strength of a steel sheet located on the outer side of the vehicle body in the front-and-rear direction is preferably smaller than the sheet thickness and/or tensile strength of a steel sheet located on the inner side of the vehicle body. In this way, when an impact load in the front-and-rear direction is applied to the vehicle body, the part of the structural member 20 or 20B located on the outer side of the vehicle body is deformed to absorb the impact energy, while the part located on the inner side of the vehicle body is less likely to be deformed so that peripheral components can be protected.

Embodiments of the present disclosure have been described above. However, the present disclosure is not limited to the embodiments described above, and various modifications can be made without departing from the spirit of the present disclosure.

In the embodiments described above, examples have been described in which the surfaces 311 and 321 of the steel sheets 31 and 32 located on the outer sides of the overlap part 361 having the largest thickness are subjected to a treatment for increasing the emissivity to be higher than that of the other surfaces of the steel sheets 31, 32 and 33. However, it is sufficient if at least one of the surfaces 311 and 321 on the outer sides of the overlap part 361 having the largest thickness is subjected to a treatment for increasing the emissivity to be higher than that of at least one of the other surfaces of the steel sheets 31, 32 and 33.

For example, with the blank 30 according to the first embodiment described above, the emissivity of the surfaces 311 and 321 of the steel sheets 31 and 32 located on the outer sides of the overlap part 361 having the largest sheet thickness tₘₐₓ is previously made higher than the emissivity of both surfaces of the steel sheet 33 having the smallest sheet thickness tₘᵢₙ. That is, the surfaces 311 and 321 of the steel sheets 31 and 32 are provided with the film 50, while both surfaces of the steel sheet 33 are not provided with the film 50. However, it is sufficient if at least one of the surfaces 311 and 321 of the steel sheets 31 and 32 is provided with the film 50 and one or more of the other surfaces of the steel sheets 31, 32 and 33 are not provided with the film 50. For example, one or both surfaces of the steel sheet 33 may be coated with the film 50. However, when the thinnest steel sheet 33 is a plated steel sheet, at least one surface of the steel sheet 33 is preferably not provided with the film 50, from the viewpoint of ensuring a process window.

With the blank 30 according to the first embodiment described above, in the steel sheets 31 and 32, the emissivity of the surfaces 311 and 321 located on the outer sides of the overlap part 361 is previously made higher than the emissivity of the surfaces 312 and 322 located on the inner side of the overlap part 361. That is, in the steel sheets 31 and 32, the surfaces 311 and 321 on the outer sides are provided with the film 50, while the surfaces 312 and 322 on the inner side are not provided with the film 50. However, the surface 311 of the steel sheet 31 located on the inner side of the overlap part 361 may be coated with the film 50. Similarly, the surface 321 of the steel sheet 32 located on the inner side of the overlap part 361 may be coated with the film 50. However, from the viewpoint of uniformly heating the blank 30 for hot stamping, it is preferred that the surfaces 311 and 321 of the steel sheets 31 and 32 located on the outer sides of the overlap part 361 are coated with the film 50 and the surfaces 312 and 322 on the inner side of the overlap part 361 are not coated with the film 50. Specifically, when both surfaces of each of the steel sheets 31 and 32 forming the overlap part 361 are coated with the film 50, the part of each of the steel sheets 31 and 32 not overlaid on the other steel sheet is excessively heated in the heating step, and the diffusion layer is likely to grow beyond a predetermined thickness, and as a result, the corrosion resistance (rust resistance) of the plating layers 31b and 32b may be unable to be ensured. That is, providing both surfaces of each of the steel sheets 31 and 32 with the film 50 may rather lead to narrowing of the process window of the heating condition. Therefore, it is preferred that the surfaces 311 and 321 of the steel sheets 31 and 32 located on the outer sides of the overlap part 361 are coated with the film 50, and the surfaces 312 and 322 located on the inner side of the overlap part 361 are not coated with the film 50. In this case, in the structural member 10 after hot stamping, there is the film 13 on the surfaces 311 and 321 of the steel sheets 31 and 32 located on the outer sides of the overlap part 361, and there is no film 13 on the surfaces 312 and 322 located on the inner side of the overlap part 361.

With the blank 30A according to the second embodiment described above, the emissivity of the surfaces 311 and 321 of the steel sheets 31 and 32 located on the outer sides of the overlap part 361 having the largest sheet thickness tₘₐₓ is higher than the emissivity of both surfaces of the steel sheet 33 having the smallest sheet thickness tₘᵢₙ during the heating step. That is, in both the steel sheets 31 and 32 forming the overlap part 361, the deposition amounts W1 and W2 of the aluminum-based plating layers 31b and 32b are 60 g/m² or less, which is less than the deposition amount W3 of the aluminum-based plating layer 33b of the other steel sheet 33. However, with the blank 30A, it is sufficient if the deposition amount of the aluminum-based plating layer of at least one of the steel sheets 31 and 32 is 60 g/m² or less and is less than the deposition amount of the aluminum-based plating layer of one or more of the other surfaces of the steel sheets 31, 32 and 33. For example, when the deposition amount W1 of the aluminum-based plating layer 31b of the steel sheet 31 is 60 g/m² or less, the deposition amount W2 of the aluminum-based plating layer 32b of the steel sheet 32 may be more than 60 g/m². In this case, the deposition amount W2 may be equal to or more than the deposition amount W3 of the aluminum-based plating layer 33b of the steel sheet 33. Similarly, when the deposition amount W2 of the aluminum-based plating layer 32b of the steel sheet 32 is 60 g/m² or less, the deposition amount W1 of the aluminum-based plating layer 31b of the steel sheet 31 may be more than 60 g/m². In this case, the deposition amount W1 may be equal to or more than the deposition amount W3 of the aluminum-based plating layer 33b of the steel sheet 33.

With the structural member 10A according to the second embodiment described above, the thicknesses K1 and K2 of the aluminum-based plating layers 31b and 32b of both the steel sheets 31 and 32 forming the overlap part 361 having the largest sheet thickness tₘₐₓ are less than the thickness K3 of the aluminum-based plating layer 33b of the other steel sheet 33. However, with the structural member 10A, it is sufficient if the thickness of the aluminum-based plating layer of at least one of the steel sheets 31 and 32 is less than the thickness K3 of the aluminum-based plating layer 33b of the other steel sheet 33. For example, when the thickness K1 of the aluminum-based plating layer 31b of the steel sheet 31 is less than the thickness K3 of the aluminum-based plating layer 33b of the steel sheet 33, the thickness K2 of the aluminum-based plating layer 32b of the steel sheet 32 may be equal to or more than the thickness K3 of the aluminum-based plating layer 33b of the steel sheet 33. Similarly, when the thickness K2 of the aluminum-based plating layer 32b of the steel sheet 32 is less than the thickness K3 of the aluminum-based plating layer 33b of the steel sheet 33, the thickness K1 of the aluminum-based plating layer 31b of the steel sheet 31 may be equal to or more than the thickness K3 of the aluminum-based plating layer 33b of the steel sheet 33.

According to the second embodiment described above, both the steel sheets 31 and 32 forming the overlap part 361 having the largest sheet thickness tₘₐₓ are aluminum-plated steel sheets. However, it is sufficient if at least one of the steel sheets 31 and 32 is a plated steel sheet having a base steel sheet and an aluminum-based plating layer. When one of the steel sheets 31 and 32 is an aluminum-plated steel sheet, the other of the steel sheets 31 and 32 may be a zinc-plated steel sheet, for example.

With the blank 30 according to the first embodiment described above, the emissivity of the surfaces 311 and 321 on the outer sides of the overlap part 361 having the largest sheet thickness tₘₐₓ is increased by providing the film 50. With the blank 30A according to the second embodiment described above, the emissivity of the overlap part 361 is increased during the heating step by reducing the deposition amount of the aluminum-based plating layer on the surfaces 311 and 321 on the outer sides of the overlap part 361 compared with the deposition amount on the other surfaces. However, the treatment for increasing the emissivity of the overlap part is not limited to these. For example, the emissivity of the overlap part 361 can also be increased by increasing the surface roughness of the overlap part 361 compared with the surface roughness of the other parts.

In the embodiments described above, each of the steel sheets 31, 32 and 33 included in the blanks 30 and 30A may be single-layer or multilayer. That is, each of the steel sheets 31, 32 and 33 may be a single steel sheet or a sheet material formed by stack of a plurality of steel sheets.

In the embodiments described above, end parts of the steel sheets 31 and 32 are lap-joined to form the overlap part 361. Similarly, end parts of the steel sheets 31 and 33 are lap-joined to form the overlap part 362. However, the blanks 30, 30A and 30B and the structural members 10 and 10A have only to include at least one overlap part. That is, a steel sheet that does not form the overlap part 361 having the largest thickness does not necessarily have to be lap-joined to another steel sheet and may be butt-joined to another steel sheet.

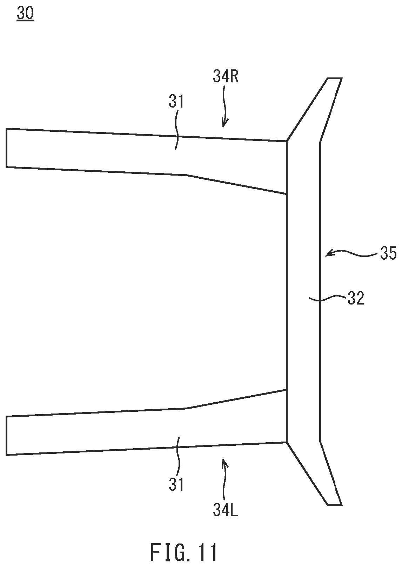

In the first embodiment described above, the blank 30 includes the steel sheets 31 and 32 corresponding to each of the elongated parts 34L and 34R (side frames 11L and 11R) and the steel sheet 33 corresponding to the coupling part 35 (cross member 12). However, the number and arrangement of the steel sheets included in the blank 30 and the structural member 10 produced from the blank 30 are not limited to these. As shown in FIGS. 11 to 13, the number and arrangement of the steel sheets can be modified as required.

For example, as shown in FIG. 11, in the blank 30 corresponding to the structural member 10 (FIG. 1) of the lower front module, the elongated parts 34L and 34R may be each formed by a single steel sheet 31. In the blank 30, the coupling part 35 may couple one end parts of the elongated parts 34L and 34R in the longitudinal direction to each other, as in the first embodiment. That is, the elongated parts 34L and 34R may be coupled by the coupling part 35 at the end parts located toward the front or rear when the structural member 10 is assembled in the vehicle body.

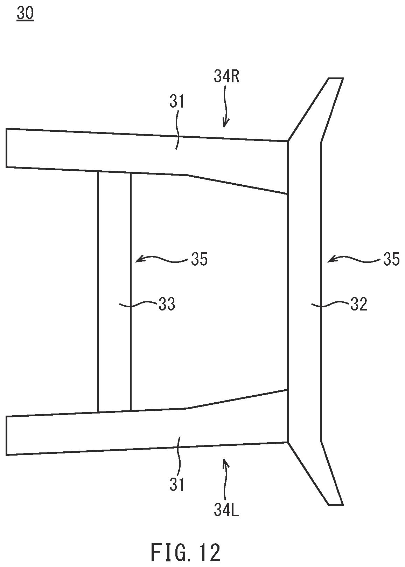

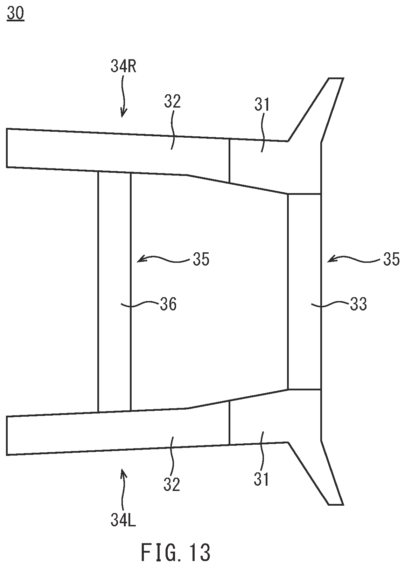

In the first embodiment described above, since the structural member 10 includes one cross member 12, the blank 30 for the structural member 10 also includes one coupling part 35. However, the structural member 10 may include a plurality of cross members 12. In that case, as shown in FIGS. 12 and 13, the blank 30 also includes a plurality of coupling parts 35. These coupling parts 35 are formed by separate steel sheets 32 and 33 or separate steel sheets 33 and 36. The elongated parts 34L and 34R may be each formed by a single steel sheet 31 as shown in FIG. 12 or may be each formed by a plurality of steel sheets 31 and 32 as shown in FIG. 13.

Although not shown, for the structural member 10A and the blank 30A and the lower-side structural member 20 and the blank 40 according to the other embodiments, the number and arrangement of steel sheets are also not particularly limited. Each of the structural members 10, 10A and 20 and the blanks 30, 30A and 40 has only to include two or more steel sheets joined to each other. Each of the structural members 10, 10A and 20 and the blanks 30, 30A and 40 preferably includes three or more steel sheets. In each of the blanks 30, 30A and 40, one or both of the steel sheets forming the overlap part having the largest sheet thickness tₘₐₓ are subjected to a treatment for increasing the emissivity. The other steel sheets may or may not be subjected to the treatment for increasing the emissivity. Each of the blanks 30, 30A and 40 has only to include one or more steel sheets having one or both surfaces that are not subjected to the treatment for increasing the emissivity.

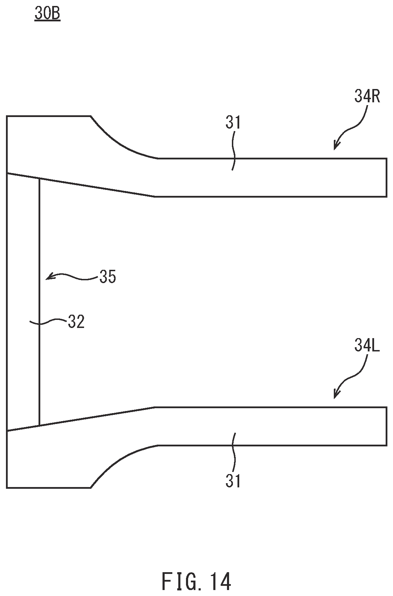

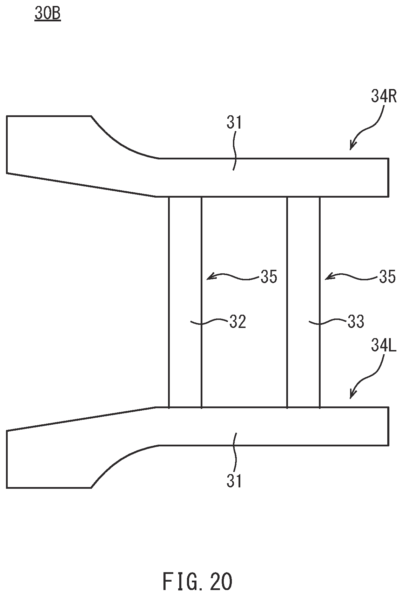

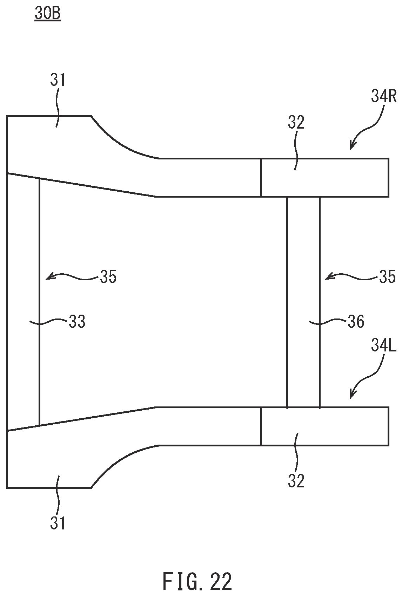

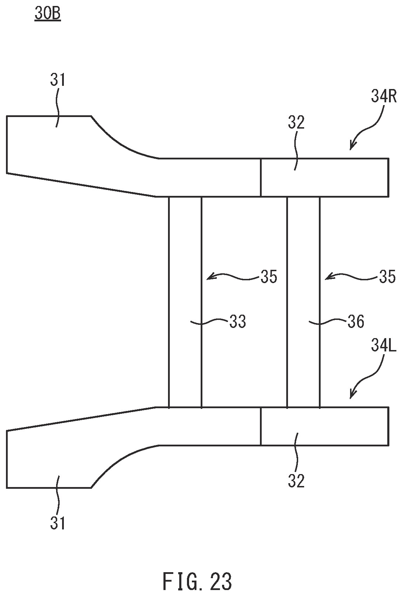

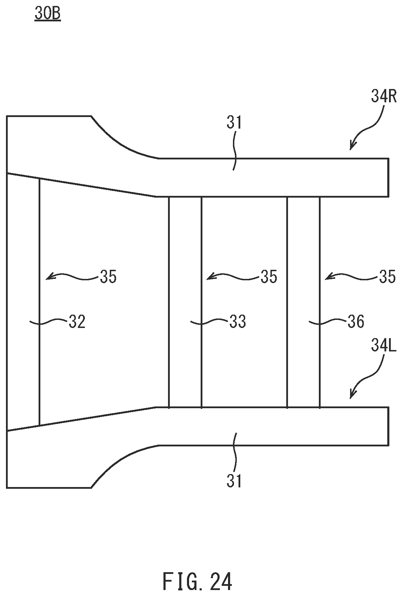

In the third embodiment described above, the blank 30B corresponds to the structural member 10B of the lower rear module. The blank 30B includes the steel sheets 31 and 32 corresponding to each of the elongated parts 34L and 34R (side frames 11L and 11R) and the steel sheet 33 corresponding to the coupling part 35 (cross member 12). However, the number and arrangement of the steel sheets included in the blank 30B and the structural member 10B produced from the blank 30B are also not limited to these. As shown in FIGS. 14 to 24, the number and arrangement of the steel sheets can be modified as required.

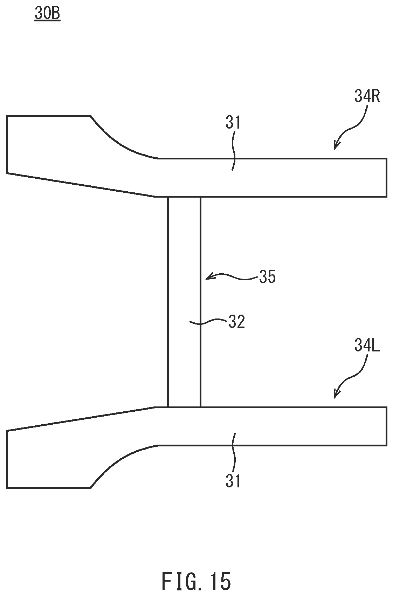

For example, as shown in FIGS. 14 and 15, in the blank 30B, the elongated parts 34L and 34R may be each formed by a single steel sheet 31. In that case, the coupling part 35 may couple the elongated parts 34L and 34R to each other at one end parts thereof in the longitudinal direction. For example, the elongated parts 34L and 34R may be coupled by the coupling part 35 at the end parts located toward the front when the structural member 10B (FIG. 8) is assembled in the vehicle body. The elongated parts 34L and 34R may be coupled by the coupling part 35 at middle parts thereof.

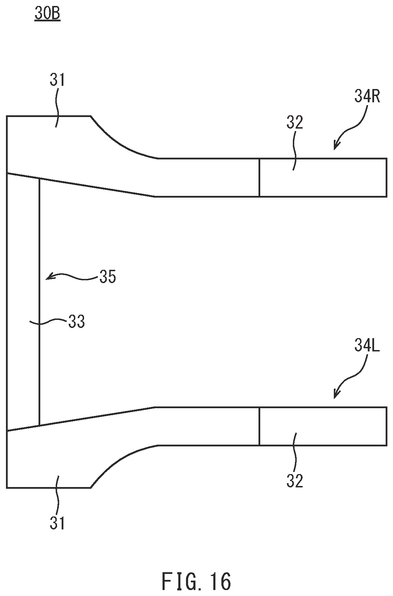

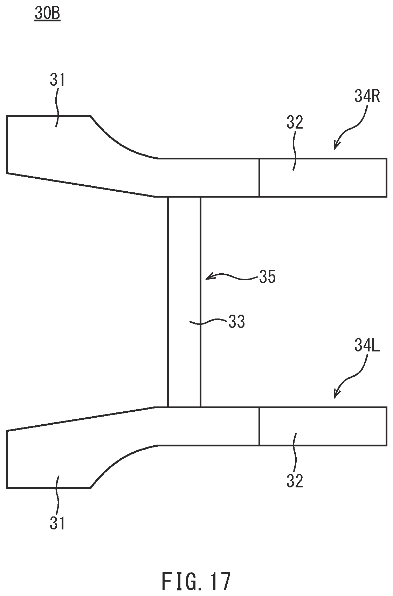

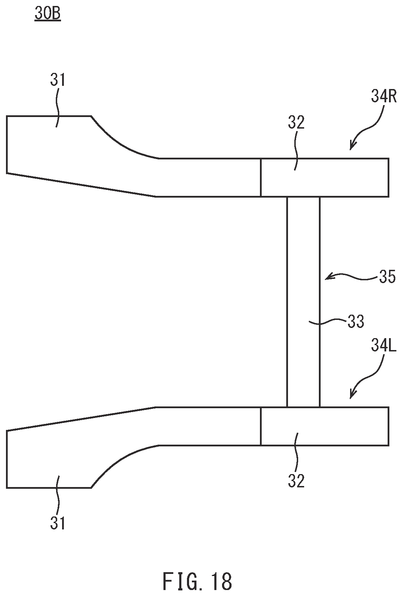

In the case where the elongated parts 34L and 34R of the blank 30B are each formed by a plurality of steel sheets 31 and 32 as shown in FIG. 16, again, the elongated parts 34L and 34R may be coupled by the coupling part 35 at the end parts located toward the front when the structural member 10B (FIG. 8) is assembled in the vehicle body. For example, when the parts corresponding to the front parts 111 of the side frames 11L and 11R (FIG. 8) are formed by the steel sheets 31, and the parts corresponding to the rear parts 112 (FIG. 8) are formed by the steel sheets 32, the coupling part 35 may be joined to the steel sheets 31 as shown in FIGS. 16 and 17 or may be joined to the steel sheets 32 as shown in FIG. 18.

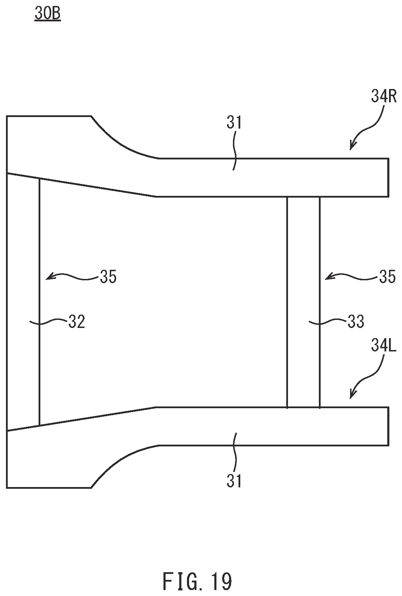

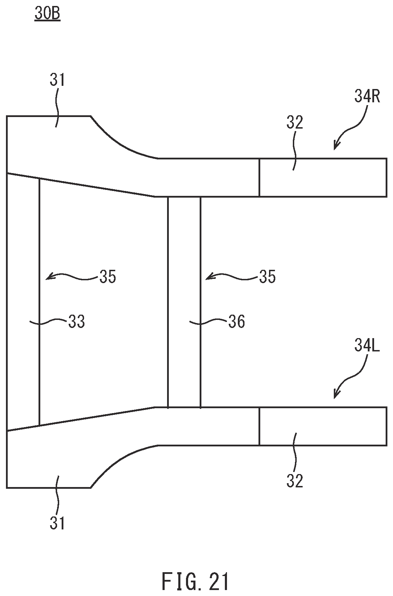

In the third embodiment described above, since the structural member 10B (FIG. 8) includes one cross member 12, the blank 30B for the structural member 10B also includes one coupling part 35. However, the structural member 10B may include a plurality of cross members 12. In that case, as shown in FIGS. 19 to 24, the blank 30B also includes a plurality of coupling parts 35. The coupling parts 35 are formed by separate steel sheets 32 and 33, separate steel sheets 33 and 36 or separate steel sheets 32, 33 and 36. In this case, the elongated parts 34L and 34R may be each formed by a single steel sheet 31 as shown in FIGS. 19, 20 and 24 or may be each formed by a plurality of steel sheets 31 and 32 as shown in FIGS. 21 to 23.

Although not shown, in the third embodiment, the number and arrangement of steel sheets of the lower-side structural member 20B and the blank 40 are also not particularly limited. Each of the structural members 10B and 20B and the blanks 30B and 40B has only to include two or more steel sheets joined to each other. Each of the structural members 10B and 20B and the blanks 30B and 40B preferably includes three or more steel sheets. In each of the blanks 30B and 40B, one or both of the steel sheets forming the overlap part having the largest sheet thickness tₘₐₓ are subjected to a treatment for increasing the emissivity. The other steel sheets may or may not be subjected to the treatment for increasing the emissivity. Each of the blanks 30B and 40B has only to include one or more steel sheets having one or both surfaces that are not subjected to the treatment for increasing the emissivity.

Typically, all of the steel sheets included in the blanks 30, 30A and 30B and the structural members 10, 10A and 10B according to the embodiments described above are plated steel sheets. However, in the blanks 30, 30A and 30B and the structural members 10, 10A and 10B, at least one of steel sheets may be steel sheets (bare materials) that have no plating layer. Similarly, for steel sheets included in the blanks 40 and 40B and the structural members 20 and 20B, all the steel sheets may be plated steel sheets, or at least one of the steel sheets may be bare materials.

In the blanks 30, 30A and 30B according to the embodiments described above, the steel sheet 33 that does not form the overlap part 361 having the largest sheet thickness tₘₐₓ has the smallest sheet thickness tₘᵢₙ. However, one or both of the steel sheets 31 and 32 forming the overlap part 361 having the largest sheet thickness tₘₐₓ may be the steel sheet(s) having the smallest sheet thickness tₘᵢₙ in the blanks 30, 30A and 30B. Similarly, in the blanks 40 and 40B, one or both of the steel sheets forming the overlap part having the largest sheet thickness tₘₐₓ may be the steel sheet(s) having the smallest sheet thickness tₘᵢₙ, or another steel sheet may be the steel sheet having the smallest sheet thickness tₘᵢₙ.

In the embodiments described above, the blanks 30, 30A and 30B each include only one overlap part 361 having the largest sheet thickness tₘₐₓ. However, the blanks 30, 30A and 30B may each include a plurality of overlap parts 361 having the largest sheet thickness tₘₐₓ. Similarly, the blanks 40 and 40B may each include a plurality of overlap parts having the largest sheet thickness tₘₐₓ. In that case, one or both surfaces on the outer sides of all the overlap parts having the largest sheet thickness tₘₐₓ are preferably subjected to the treatment for increasing the emissivity.

In each of the blanks 30, 30A and 30B according to the embodiments described above, all the steel sheets have different sheet thicknesses. However, of the plurality of steel sheets included in each of the blanks 30, 30A and 30B, some steel sheets may have the same sheet thickness, or all the steel sheets may have the same sheet thickness. When all the steel sheets included in each of the blanks 30, 30A and 30B have the same sheet thickness, tₘₐₓ/tₘᵢₙ is 2.0. Similarly, in the blanks 40 and 40B, some steel sheets may have the same sheet thickness, or all the steel sheets may have the same sheet thickness.

In the embodiments described above, the press tooling 60 used in the shaping step includes the punch 61 and the die 62. However, the configuration of the press tooling 60 is not limited to the example described in the above embodiments. The press tooling 60 may further include a pad or a blank holder, for example. The press tooling 60 can be any press tooling suitable for the intended structural member.

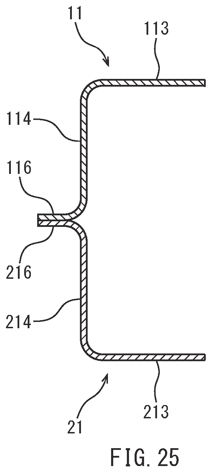

In the structural members 10, 10A, 10B, 20 and 20B according to the embodiments described above, the side frames 11 and 21 have a substantially hat-shaped lateral cross section. However, the shape of the lateral cross section of the side frames 11 and 21 is not necessarily limited to this. For example, the side frames 11 and 21 may be shaped to be open on one side in the width direction in a lateral cross-sectional view as shown in FIG. 25. In that case, another member (not shown) may be joined to the open parts of the side frames 11 or 21 and that the side frames 11 and 21 and the other member form a closed cross section. Similarly, the cross members 12 and 22 may each have a substantially hat-shaped lateral cross section or have a lateral cross section having another shape.

### EXAMPLES

In the following, the present disclosure will be described in more detail with reference to examples. However, the present disclosure is not limited to the examples described below.

In order to check the effects of the present disclosure, using commercially available software (AUTOFORM R. 10 available from AUTOFORM), CAE analysis of the press forming (hot stamping) of structural members that were lower front or rear modules was performed for different types (types of starting materials) and sheet thicknesses of steel sheets included in the structural members and different division patterns of the structural members.

Table 1 shows types of the steel sheets (types of starting materials).

### [Table 1]

**TABLE 1**

| Symbol | Type of starting material | Base material | Film specifications |
|---|---|---|---|
| A | Al-Si 1.5G HS | Steel sheet of 1.5 GPa class for hot stamping | No film |
| A-1 | Al-Si 1.5G HS | Steel sheet of 1.5 GPa class for hot stamping | Black film/one side |
| A-2 | Al-Si 1.5G HS | Steel sheet of 1.5 GPa class for hot stamping | Black film/both sides |
| B | Al-Si 2.0G HS | Steel sheet of 2.0 GPa class for hot stamping | No film |
| B-1 | Al-Si 2.0G HS | Steel sheet of 2.0 GPa class for hot stamping | Black film/one side |
| B-2 | Al-Si 2.0G HS | Steel sheet of 2.0 GPa class for hot stamping | Black film/both sides |
| C | Al-Si 2.5G HS | Steel sheet of 2.5 GPa class for hot stamping | No film |
| C-1 | Al-Si 2.5G HS | Steel sheet of 2.5 GPa class for hot stamping | Black film/one side |
| C-2 | Al-Si 2.5G HS | Steel sheet of 2.5 GPa class for hot stamping | Black film/both sides |
| D | Al-Si 1.0G HS | Steel sheet of 1.0 GPa class for hot stamping | No film |
| D-1 | Al-Si 1.0G HS | Steel sheet of 1.0 GPa class for hot stamping | Black film/one side |
| D-2 | Al-Si 1.0G HS | Steel sheet of 1.0 GPa class for hot stamping | Black film/both sides |
| E | Al-Si 0.5G HS | Steel sheet of 0.5 GPa class for hot stamping | No film |
| E-1 | Al-Si 0.5G HS | Steel sheet of 0.5 GPa class for hot stamping | Black film/one side |
| E-2 | Al-Si 0.5G HS | Steel sheet of 0.5 GPa class for hot stamping | Black film/both sides |

In Table 1, the "type of starting material" shows type of plating, tensile strength and use (hot stamping) in this order. Concerning the film specifications, "black film" is a film that contains carbon black and metal oxide and is black in color. "Black film/one side" means that the whole of one surface of the steel sheet is coated with a black film. "Black film/both sides" means that the whole of both surfaces of the steel sheet is coated with a black film. In this analysis, the types of starting materials were selected from Table 1 to construct the target structural member.

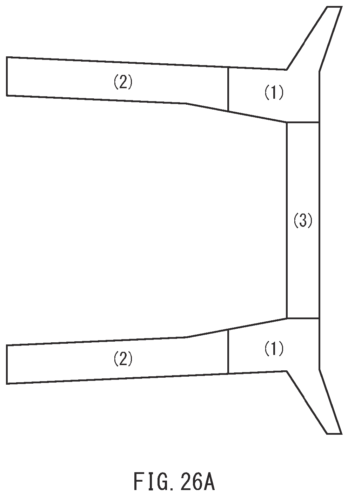

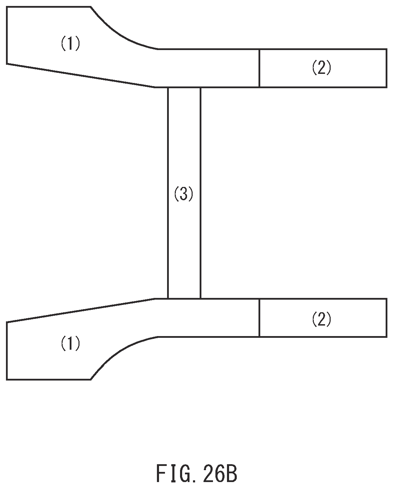

FIGS. 26A and 26B show division patterns of the structural member. The structural member shown in FIG. 26A is an upper-side structural member of the lower front module. The structural member shown in FIG. 26B is an upper-side structural member of the lower rear module. FIGS. 26A to 26B show the number of steel sheets (starting materials) included in the structural members and the positions of the junctures between the steel sheets in the structural members. In FIGS. 26A and 26B, each steel sheet is denoted by a numeral in parentheses.

Table 2 shows analysis conditions and results for the structural members shown in FIGS. 26A and 26B. In FIGS. 26A and 26B, each of the side frames of the structural members is formed by two starting materials (1) and (2). In FIG. 26A, the starting material (2) forms a front part of the side frame, and the starting material (1) forms a rear part of the side frame. In FIG. 26B, the starting material (1) forms a front part of the side frame, and the starting material (2) forms a rear part of the side frame. The cross member is formed by a starting material (3). The starting materials (1) to (3) are each lap-joined to adjacent starting materials.

### [Table 2]

**TABLE 2**

| Symbol | Division pattern | Starting material (1) | | Starting material (2) | | Starting material (3) | | Smallest sheet thickness tₘᵢₙ, mm | Largest sheet thickness tₘₐₓ, mm | Time required to reach 910°C, s | Heating completion time, s | PW, s |
|---|---|---|---|---|---|---|---|---|---|---|---|---|
| | | Type of starting material | Sheet thickness, mm | Type of starting material | Sheet thickness, mm | Type of starting material | Sheet thickness, mm | | | | | |
| Example 1 | FIG. 26B | A-1 | 1.6 | A-1 | 1.2 | D-1 | 1.0 | 1.0 | 2.8 | 107.1 | 269.0 | 83.1 |
| Example 2 | FIG. 26B | B-1 | 1.6 | D-1 | 1.4 | D-1 | 1.0 | 1.0 | 3.0 | 124.6 | 288.2 | 81.4 |
| Example 3 | FIG. 26A | A-1 | 1.8 | D-1 | 1.2 | A-1 | 1.6 | 1.2 | 3.4 | 128.5 | 326.6 | 46.9 |
| Comparative example 1 | FIG. 26B | A | 1.6 | A | 1.2 | D | 1.0 | 1.0 | 2.8 | 124.6 | 349.6 | 20.0 |
| Comparative example 2 | FIG. 26A | A | 1.8 | D | 1.2 | A | 1.6 | 1.2 | 3.4 | 149.5 | 424.5 | -30.0 |

In Table 2, "time required to reach 910°C" means the time required for the starting material having the smallest sheet thickness tₘᵢₙ among the starting materials included in the blank to reach 910°C (A_{c3} point or higher) after the start of heating of the blank. "Heating completion time" means the time required for a part that is the slowest to rise in temperature in the blank to reach 910°C so that hot stamping can be performed after the start of heating of the blank. "Process window (PW)" means a value obtained by subtracting the heating completion time from the sum of the allowable heating time (245 seconds) after the starting material having the smallest sheet thickness tₘᵢₙ reaches 910°C and the time required to reach 910°C. The greater this value, the wider the process window of the heating condition in hot stamping of the structural member.

With reference to Table 2 and FIG. 26B, in an example 1, the starting materials (1) and the starting material (2) formed an overlap part having the largest sheet thickness tₘₐₓ = 2.8 mm, and the surface of each of the starting materials (1) and (2) that was located on the outer side of the overlap part was provided with a film that was substantially black in color (black film) described in the first embodiment. On the other hand, the surface of each of the starting materials (1) and (2) that was located on the inner side of the overlap part was not provided with the black film. Furthermore, in the example 1, the starting material (3) had the smallest sheet thickness tₘᵢₙ = 1.0 mm, and only one surface of the starting material (3) was provided with the black film. In a comparative example 1, in which the combination of the type of the starting material and the sheet thickness was the same as in the example 1, any of the starting materials (1) to (3) was not provided with the black film. In the example 1, since both outer sides of the overlap part, which was the thickest part, were provided with the black film, heating of the overlap part was promoted, and the heating completion time of the blank was substantially reduced compared with the comparative example 1. In the example 1, even though the thinnest starting material (3) was provided with the black film and therefore the time required to reach 910°C was shorter than in the comparative example 1, the process window was enlarged by 60 seconds or more compared with the comparative example 1.

With reference to Table 2 and FIG. 26A, in an example 3, the starting material (1) and the starting material (3) formed an overlap part having the largest sheet thickness tₘₐₓ = 3.4 mm, and the surface of each of the starting materials (1) and (3) that was located on the outer side of the overlap part was provided with a black film. On the other hand, the surface of each of the starting materials (1) and (3) that was located on the inner side of the overlap part was not provided with the black film. Furthermore, in the example 3, the starting material (2) had the smallest sheet thickness tₘᵢₙ = 1.2 mm, and only one surface of the starting material (2) was provided with the black film. In a comparative example 2, in which the combination of the type of the starting material and the sheet thickness was the same as in the example 3, any of the starting materials (1) to (3) was not provided with the black film. In the example 3, since both outer sides of the overlap part, which was the thickest part, were provided with the black film, heating of the overlap part was promoted, and the heating completion time of the blank was substantially reduced compared with the comparative example 2. In the example 3, even though the thinnest starting material (2) was provided with the black film and therefore the time required to reach 910°C was shorter than in the comparative example 2, the process window was enlarged by 70 seconds or more compared with the comparative example 2. In the comparative example 2, the process window of the heating condition was lost (negative).

In an example 2, the starting material (1) and the starting material (2) formed an overlap part having the largest sheet thickness tₘₐₓ = 3.0 mm, and the surface of each of the starting materials (1) and (2) that was located on the outer side of the overlap part was provided with a black film. On the other hand, the surface of each of the starting materials (1) and (2) that was located on the inner side of the overlap part was not provided with the black film. Furthermore, in the example 2, the starting material (3) had the smallest sheet thickness tₘᵢₙ = 1.0 mm. In the example 2, again, it was ascertained that the process window of the heating condition was enlarged compared with each comparative example.

In the examples, it was ascertained that by subjecting the surface(s) of the overlap part having the largest thickness to the treatment for increasing the emissivity, the heating rate of the overlap part can be increased, and the process window of the heating condition in the production of the structural member can be enlarged.

### REFERENCE SIGNS LIST

- 10, 10A, 10B:: structural member
- 11, 11L, 11R:: side frame
- 12:: cross member
- 13:: film
- 20, 20B:: structural member
- 21, 21L, 21R:: side frame
- 22:: cross member
- 30, 30A, 30B:: blank
- 31, 32, 33, 36:: steel sheet
- 31a, 32a, 33a:: base steel sheet
- 31b, 32b, 33b:: plating layer
- 311, 312, 321, 322:: surface
- 361, 362:: overlap part
- 34L, 34R:: elongated part
- 35:: coupling part
- 40, 40B:: blank
- 41, 42, 43:: steel sheet
- 44L, 44R:: elongated part
- 45:: coupling part
- 50:: film
- 60:: press tooling

## Claims

1. A blank for hot stamping, comprising:
a plurality of steel sheets disposed and joined to form two elongated parts that are disposed side by side in a lateral direction in plan view of the blank and a coupling part that couples the elongated parts to each other,
wherein the plurality of steel sheets includes:
a first steel sheet; and
a second steel sheet having an end part that is overlaid on and joined to an end part of the first steel sheet to form, with the end part of the first steel sheet, an overlap part having a largest sheet thickness in the blank,
at least one of the plurality of steel sheets is a plated steel sheet having a base steel sheet and a plating layer provided on the base steel sheet, and
a surface of at least one of the first steel sheet and the second steel sheet that is located on an outer side of the overlap part is subjected to a treatment for increasing an emissivity compared with at least one of other surfaces of the plurality of steel sheets.

2. The blank according to Claim 1, wherein of the plurality of steel sheets, a steel sheet that forms a part having a smallest sheet thickness in the blank is the plated steel sheet.

3. The blank according to Claim 1, wherein a surface of each of the first steel sheet and the second steel sheet that is located on the outer side of the overlap part is subjected to the treatment for increasing the emissivity compared with at least one of other surfaces of the plurality of steel sheets.

4. The blank according to Claim 1, wherein each of the plurality of steel sheets is the plated steel sheet.

5. The blank according to Claim 4, wherein the plating layer is an aluminum-based plating layer.

6. The blank according to Claim 3, wherein on the surface of each of the first steel sheet and the second steel sheet that is located on the outer side of the overlap part, a film having an emissivity of 60% or more at a temperature of 25°C and a wavelength of 8.0 µm is formed as the treatment for increasing the emissivity.

7. The blank according to Claim 3, wherein on the surface of each of the first steel sheet and the second steel sheet that is located on the outer side of the overlap part, a film is formed as the treatment for increasing the emissivity,
the film contains carbon black, one or more oxides selected from among the group consisting of Zr oxide, Zn oxide and Ti oxide, and 0 to 0.30 g/m² of silica, and
provided that a content of the carbon black in the film is X_{CB} (g/m²), and a content of the oxide is X_{Oxide} (g/m²), X_{CB} and X_{Oxide} satisfy Formula (1): $118.9 \leq 24280 / \left\{6700/\left(100+76\times {X}_{CB}\right)+18000/\left(130+65\times {X}_{Oxide}\right)\right\} \leq 332.0$

8. The blank according to Claim 3, wherein the plurality of steel sheets include two or more steel sheets having different sheet thicknesses, and
provided that a sheet thickness of the overlap part is tₘₐₓ, and a sheet thickness of a steel sheet that forms a part having a smallest sheet thickness in the blank is tₘᵢₙ, tₘₐₓ/tₘᵢₙ ≤ 3.2.

9. The blank according to Claim 1, wherein the plurality of steel sheets further include a third steel sheet,
each of at least one of the first steel sheet and the second steel sheet and the third steel sheet is the plated steel sheet having an aluminum-based plating layer as the plating layer on both surfaces of the base steel sheet, and
as the treatment for increasing the emissivity of the surface that is located on the outer side of the overlap part compared with an emissivity of a surface of the third steel sheet, a deposition amount (g/m²) of the aluminum-based plating layer on both surfaces of the base steel sheet of the at least one of the first steel sheet and the second steel sheet is 60 or less and is less than a deposition amount (g/m²) of the aluminum-based plating layer on both surfaces of the base steel sheet of the third steel sheet.

10. The blank according to Claim 9, wherein the plurality of steel sheets include two or more steel sheets having different sheet thicknesses, and
provided that a sheet thickness of the overlap part is tₘₐₓ, and a sheet thickness of a steel sheet having a smallest sheet thickness among the plurality of steel sheets is tₘᵢₙ, tₘₐₓ/tₘᵢₙ ≤ 3.0.

11. The blank according to Claim 9, wherein the plurality of steel sheets include two or more steel sheets having different sheet thicknesses,
provided that a sheet thickness of the overlap part is tₘₐₓ, and a sheet thickness of a steel sheet having a smallest sheet thickness among the plurality of steel sheets is tₘᵢₙ, tₘₐₓ/tₘᵢₙ ≤ 4.0, and
a surface of at least one of the first steel sheet and the second steel sheet that is located on the outer side of the overlap part is coated with a film that is black in color.

12. A production method for a structural member, comprising:
a step of preparing the blank according to any one of Claims 1 to 11;
a step of heating the plurality of steel sheets included in the blank to an austenite transformation completion temperature or higher; and
a step of shaping and quenching the heated blank with press tooling.

13. A structural member for a vehicle body, comprising:
a pair of side frames; and
a cross member that couples the side frames to each other,
wherein the side frames and the cross member are formed by a plurality of steel sheets joined to each other, the plurality of steel sheets including a first steel sheet and a second steel sheet having an end part that is overlaid on and joined to an end part of the first steel sheet to form an overlap part with the end part of the first steel sheet, and
a film containing 0.001 g/m² or more of one or more oxides selected from among the group consisting of Zr oxide, Zn oxide and Ti oxide is provided on a surface of each of the first steel sheet and the second steel sheet that is located on an outer side of the overlap part.

14. A structural member for a vehicle body, comprising:
a pair of side frames; and
a cross member that couples the side frames to each other,
wherein the side frames and the cross member are formed by a plurality of steel sheets joined to each other, the plurality of steel sheets including a first steel sheet and a second steel sheet having an end part that is overlaid on and joined to an end part of the first steel sheet to form an overlap part with the end part of the first steel sheet, and
a film containing 0.500 g/m² or less of carbon black is provided on a surface of each of the first steel sheet and the second steel sheet that is located on an outer side of the overlap part.

15. A structural member for a vehicle body, comprising:
a pair of side frames; and
a cross member that couples the side frames to each other,
wherein the side frames and the cross member are formed by a plurality of steel sheets joined to each other, the plurality of steel sheets including a first steel sheet, a second steel sheet having an end part that is overlaid on and joined to an end part of the first steel sheet to form an overlap part with the end part of the first steel sheet, and a third steel sheet,
each of at least one of the first steel sheet and the second steel sheet and the third steel sheet is a plated steel sheet having an aluminum-based plating layer on both surfaces of a base steel sheet, and
a thickness of the aluminum-based plating layer of the at least one of the first steel sheet and the second steel sheet is less than a thickness of the aluminum-based plating layer of the third steel sheet.

16. The structural member according to Claim 15, wherein provided that, in the overlap part, a largest value and a smallest value of Vickers hardness of a steel sheet among the first steel sheet and the second steel sheet that is located on a front surface-side of the structural member are HVₘₐₓ and HVₘᵢₙ, respectively, HVₘₐₓ - HVₘᵢₙ is 30% or less of HVₘₐₓ.
